# EUROPÄISCHE PATENTSCHRIFT

(11) **EP 1 856 932 B1**
(45) Veröffentlichungstag und Bekanntmachung des Hinweises auf die Patenterteilung: **04.09.2019**
(21) Anmeldenummer: 06707169.6
(22) Anmeldetag: 22.02.2006
(51) Int. Cl.: H04W 88/02

(54) **VORRICHTUNG MIT ZWEI SENDE-/EMPFANGSEINRICHTUNGEN ZUM AUSTAUSCH VON INFORMATIONEN ZWISCHEN EINEM MOBILEN ENDGERÄT UND EINEM MOBILFUNKNETZ**
DEVICE COMPRISING TWO TRANSMITTING/RECEIVING UNITS FOR EXCHANGING INFORMATION BETWEEN A MOBILE TERMINAL AND A MOBILE TELEPHONE NETWORK
DISPOSITIF COMPORTANT DEUX UNITES EMETTRICES / RECEPTRICES POUR L'ECHANGE D'INFORMATIONS ENTRE UN TERMINAL MOBILE ET UN RESEAU DE TELEPHONIE MOBILE

(30) Priorität: 08.03.2005 DE 102005011088; 31.03.2005 DE 102005015053
(43) Veröffentlichungstag der Anmeldung: 21.11.2007
(73) Patentinhaber: Vodafone Holding GmbH, 40213 Düsseldorf (DE)
(72) Erfinder: RITZMANN, Mark, 40545 Düsseldorf (DE)
(74) Vertreter: Weisbrodt, Bernd
(86) Internationale Anmeldenummer: PCT/EP2006/001606
(87) Internationale Veröffentlichungsnummer: WO 2006/094634

(56) Entgegenhaltungen:
- EP-A- 1 257 132
- WO-A-2004/025928
- US-A1- 2002 077 144
- US-A1- 2003 104 809
- US-A1- 2003 139 180

## Beschreibung

Die vorliegende Erfindung betrifft ein Kommunikationssystem zum Aufbau einer Kommunikationsverbindung zum Austausch von Informationen zwischen wenigstens einem mobilen Endgerät und einem Mobilfunknetz, mit einem Mobilfunknetz mit einer aus Funkzellen aufgebauten zellularen Netzstruktur, einer mit dem Mobilfunknetz zu Kommunikationszwecken verbindbaren, mit wenigstens einer Sende-/Empfangseinrichtung einen Funkversorgungsbereich für eine drahtlose Kommunikation im Kurzstreckenbereich bereitstellenden Vorrichtung, und wenigstens einem in dem Mobilfunknetz betreibbaren mobilen Endgerät, welches eine eine drahtlose Kommunikation im Kurzstreckenbereich über Funk ermöglichende Sende-/Empfangseinrichtung aufweist.

Ferner betrifft die vorliegende Erfindung ein Verfahren zum Aufbau einer Kommunikationsverbindung zum Austausch von Informationen zwischen einem mobilen Endgerät und einem Mobilfunknetz eines erfindungsgemäßen Kommunikationssystems.

Im Stand der Technik ist es bekannt, in Mobilfunknetzen betreibbare mobile Endgeräte zu Kommunikationszwecken anstelle über eine Funkverbindung des Mobilfunknetzes über ein mit dem Mobilfunknetz verbindbares Rechner- bzw. Computernetzwerk mit dem Mobilfunknetz zu verbinden. Dabei halten sich die in Mobilfunknetzen betreibbaren mobilen Endgeräte in vorgebbaren bestimmten Bereichen bzw. Zonen auf, und sind über eine drahtlose Kommunikation im Kurzstreckenbereich mittels Funk mit einer Vorrichtung verbunden, die über eine DSL-Verbindung mit dem Mobilfunknetz verbindbar ist. Seitens der Vorrichtung erfolgt dabei unter Zuhilfenahme einer Recheneinrichtung (Server) eine Umwandlung bzw. Konvertierung der Kommunikationssignale in mittels bzw. über DSL-Verbindungen übertragbare Signale. Weitere ähnliche Lösungen sind im Stand der Technik unter dem Begriff "Voice over IP" bekannt.

Nachteilig bei den bekannten Lösungen ist, daß abgesehen von Problemen bei der Vergebührung einer entsprechend über DSL-Verbindungen erfolgenden Kommunikation sowohl seitens des Nutzers des mobilen Endgerätes als auch seitens des Mobilfunknetzbetreibers kostenintensive DSL-Anschlüsse erforderlich sind. Darüber hinaus werden für DSL-Verbindungen in der Regel drahtgebundene Fernsprechnetze, auch Festnetze genannt, genutzt, die nicht bei allen Mobilfunknetzbetreibern vorhanden sind bzw. von diesen unterhalten werden und dementsprechend als Dienst von entsprechenden Festnetzbetreibern kostenpflichtig in Anspruch genommen werden müssen.

Im Bereich der Vergebührung von Diensten von Mobilfunknetzen, insbesondere Anrufen, ist ein fortwährender Bedarf hinsichtlich einer nutzerindividualisierbaren Vergebührung der Dienste gegeben. Lösungen für eine nutzerindividuelle Anpassung der Gebührenstruktur für bestimmte Aufenthaltsorte eines Nutzers eines mobilen Endgerätes im Mobilfunknetz sind beispielsweise aus der US 5,568,153 oder der DE 197 31 461 C1 bekannt. Dabei werden bestimmten geographischen Gebieten als Aufenthaltsorte des mobilen Endgerätes die entsprechenden Funkzellen im Mobilfunknetz eindeutig zugeordnet und bei Aufenthalt des mobilen Endgerätes in diesen Funkzellen eine andere Vergebührung für von dem mobilen Endgerät in das Mobilfunknetz gehende Anrufe vorgenommen. Diese Lösungen bedingen die Nutzung von aufwändigen und wartungsintensiven Lokalisierungstechnologien zur präzisen Bestimmung und Überprüfung des Aufenthaltsortes des mobilen Endgerätes in den vorbestimmten Funkzellen.

Die US 2002/0077144 A1 offenbart ein Verfahren zum Einstellen von Betriebsparametern in einem mobilen Endgerät, insbesondere hinsichtlich Betriebsparametereinstellungen, welchen vom Standortbereich des Endgeräts abhängen. Dabei wird eine Zoneninformation der Standortzone zugewiesen, die in einem begrenzten Übertragungsbereich drahtlos gesendet wird. Das mobile Endgerät empfängt die Zoneninformation, bestimmt daraus Betriebsparameter und setzt sie als gegenwärtige Betriebsparameter.

Die US 2003/0104809 A1 offenbart ein drahtloses Netzwerksystem, das mindestens ein drahtloses Instrument wie beispielsweise ein Mobiltelefon in Kombination mit mindestens einer Basisstation umfasst, wobei die Basisstation eine drahtlose lokale Netzwerkschnittstelle umfasst. Die Netzwerkschnittstelle, die mit einem WLAN verbunden ist, ermöglicht es der Basisstation, mit einem Controller zu kommunizieren, welcher wiederum mit einer Basisstation eines drahtlosen Kommunikationsnetzwerks kommuniziert. Dadurch kann ein Mobilfunkanbieter den Dienst für das Mobilfunknetz direkt unterstützen, selbst wenn das Telefon nicht in Verbindung mit dem Mobilfunknetz betrieben wird.

Die WO 2004/025928 A2 offenbart ein Verfahren zum Implementieren eines Telefonsystems, welches eine lokale drahtlose Verbindung und eine drahtlose Weitbereichsverbindung bereitstellt. Dabei umfasst das Telefonsystem eine Endgeräteinheit, mit einer ersten Antenne, einem ersten mit der ersten Antenne verbundenen Modem, einer zweiten Antenne, einem zweiten mit der zweiten Antenne verbundenen Modem und eine mit dem ersten und dem zweiten Modem verbundene Schnittstelle. Das erste Modem stellt eine erste Luftschnittstelle unter Verwendung der ersten Antenne für eine Nahbereichskommunikation bereit, wobei das zweite Modem eine zweite Luftschnittstelle unter Verwendung der zweiten Antenne bereitstellt und die zweite Luftschnittstelle sich von der ersten Luftschnittstelle unterscheidet.

Die US 2003/0139180 A1 offenbart ein Verfahren zum Koppeln eines drahtlosen lokalen Netzwerks mit einem öffentlichen Netzwerk, um eine Kommunikation zwischen dem drahtlosen Netzwerk und dem öffentlichen Netzwerk zugeordneten Benutzergeräteterminals zu ermöglichen. Dabei können Teilnehmer- und Sicherheitsinformationen für die Benutzergeräteterminals dem öffentlichen Netzwerk von einer jedem Benutzergeräteterminal zugeordneten SIM oder von einem Identitätsmodul bereitgestellt werden, das entweder einen privaten Speicher mit darin gespeicherten Informationen oder einen Kartenleser umfasst, welcher Karten mit Teilnehmer- und Sicherheitsinformationen für ein.oder mehrere Benutzergeräteterminals aufweist.

Die EP 1 257 132 A1 offenbart eine Vorrichtung zur Integration von mobilen Endgeräten als Nebenstellenendgeräte eines privaten Kommunikationssystems. Das privaten Kommunikationssystem kann aus einem Kommunikationsknoten wie einem Private Brach Exchange (PBX) oder einem Voice-over-IP (VolP)-Telefoniesystem bestehen. Die integrierten mobilen Endgeräte erscheinen dem Kommunikationssystem als normale Nebenstellen, wodurch sie Zugang zu allen Telefonie-Diensten und Zusatzdiensten erhalten, die im Kommunikationssystem für Telefonie-Nebenstellen angeboten werden.

In Anbetracht dieses Standes der Technik liegt der vorliegenden Erfindung die **Aufgabe** zugrunde, eine einfache und kostengünstige Lösung bereitzustellen, die unter Meidung der beschriebenen Nachteile eine nutzerindividualisierbare Vergebührung von Kommunikationsverbindungen zum Austausch von Informationen zwischen einem mobilen Endgerät und einem Mobilfunknetz ermöglicht, insbesondere unter Vermeidung einer Nutzung von Verbindungen über drahtgebundene Fernsprechnetze.

Zur technischen **Lösung** dieser Aufgabe wird mit der vorliegenden Erfindung ein Kommunikationssystem entsprechend Anspruch 1 vorgeschlagen.

Der Erfindung liegt die Erkenntnis zugrunde, daß durch Nutzung einer im Mobilfunknetz betreibbaren Sende-/Empfangseinrichtung seitens einer mit in Mobilfunknetzen betreibbaren mobilen Endgeräten über eine drahtlose Kommunikationsverbindung im Kurzstreckenbereich mittels Funk verbindbaren Vorrichtung Kommunikationsverbindungen zum Austausch von Informationen zwischen einem mobilen Endgerät und einem Mobilfunknetz ermöglicht sind, ohne daß aufwändige und kostenintensive Verbindungen über drahtgebundene Fernsprechnetze erforderlich sind. Ferner macht sich die Erfindung die Erkenntnis zu nutze, daß durch die erfindungsgemäße Nutzung einer im Mobilfunknetz betreibbaren Sende-/Empfangseinrichtung seitens der Vorrichtung neben einer Steigerung der Auslastung des Mobilfunknetzes vorteilhafterweise eine nutzerindividualisierbare Vergebührung entsprechender Kommunikationsverbindungen auf einfache Art und Weise ermöglicht wird, insbesondere ohne aufwändige Änderungen seitens des Vergebührungssystems des Mobilfunknetzes.

Erfindungsgemäß erfolgt bei Aufenthalt des wenigstens einen mobilen Endgerätes in dem Funkversorgungsbereich für eine drahtlose Kommunikation im Kurzstreckenbereich zumindest eine von dem wenigstens einen mobilen Endgerät ausgehende Kommunikationsverbindung zu wenigstens einem Kommunikationspartner über die im Mobilfunknetz betreibbare Sende-/Empfangseinrichtung der Vorrichtung. Vorteilhafterweise können so an das wenigstens eine mobile Endgerät gerichtete Kommunikationsverbindungen sowohl über das Mobilfunknetz direkt an das wenigstens eine mobile Endgerät gehen und von diesem angenommen werden, als auch über das Mobilfunknetz an die in diesem betreibbare Sende-/Empfangseinrichtung seitens der Vorrichtung gehen und über eine drahtlose Kommunikationsverbindung im Kurzstreckenbereich über Funk zwischen dem wenigstens einen mobilen Endgerät und der Vorrichtung an das wenigstens eine mobile Endgerät gehen und von diesem angenommen werden, während von dem wenigstens einen mobilen Endgerät abgehende bzw. ausgehende Kommunikationsverbindungen ausschließlich über eine drahtlose Kommunikationsverbindung im Kurzstreckenbereich über Funk zwischen dem wenigstens einen mobilen Endgerät und der Vorrichtung über die im Mobilfunknetz betreibbare Sende-/Empfangseinrichtung der Vorrichtung an bzw. in das Mobilfunknetz gehen. Dadurch ist insbesondere eine weitere Steigerung der Individualisierbarkeit von Kommunikationsverbindungen realisierbar.

Gemäß einem weiteren vorteilhaften Vorschlag der Erfindung erfolgt eine Kommunikation zwischen dem Mobilfunknetz und dem wenigstens einen mobilen Endgerät bei Aufenthalt des wenigstens einen mobilen Endgerätes in dem Funkversorgungsbereich für eine drahtlose Kommunikation im Kurzstreckenbereich über die im Mobilfunknetz betreibbare Sende-/Empfangseinrichtung der Vorrichtung. Beim dieser Ausgestaltung der Erfindung erfolgen sowohl von dem wenigstens einen mobilen Endgerät ausgehende Kommunikationsverbindungen in das Mobilfunknetz als auch an das wenigstens eine mobile Endgerät aus dem bzw. über das Mobilfunknetz gerichtete Kommunikationsverbindungen über die Vorrichtung unter Nutzung der im Mobilfunknetz betreibbaren Sende-/Empfangseinrichtung und dem Funkversorgungsbereich für eine drahtlose Kommunikation im Kurzstreckenbereich derselben. Dadurch ist insbesondere eine weitere Steigerung der Individualisierbarkeit von Kommunikationsverbindungen realisierbar, beispielsweise für eine für den Nutzer des wenigstens einen mobilen Endgerätes kostengünstigere Vergebührung von Kommunikationsverbindungen.

Bei Aufenthalt mehrerer mobiler Endgeräte in dem Funkversorgungsbereich für eine drahtlose Kommunikation im Kurzstreckenbereich sind seitens der Vorrichtung über das Mobilfunknetz eingehende Kommunikationsverbindungen vorteilhafterweise seitens aller sich in dem Funkversorgungsbereich für eine drahtlose Kommunikation im Kurzstreckenbereich aufhaltenden mobilen Endgeräte über eine drahtlose Kommunikation im Kurzstreckenbereich signalisierbar und erfolgt eine Kommunikationsverbindung mit dem mobilen Endgerät, welches zuerst die eingehende Kommunikationsverbindung annimmt, vorzugsweise durch Tasteneingabe seitens des mobilen Endgerätes.

Eine vorteilhafte Ausgestaltung der Erfindung sieht vor, daß seitens des Mobilfunknetzes wenigstens eine Funkzelle definiert ist, innerhalb deren die im Mobilfunknetz betreibbare Sende-/Empfangseinrichtung der Vorrichtung bei Aufenthalt derselben in der wenigstens einen definierten Funkzelle des Mobilfunknetzes mit wenigstens einem vorzugsweise individuell vorgebbaren Modus betreibbar ist. Dabei werden bestimmten geographischen Gebieten als Aufenthaltsorte der im Mobilfunknetz betreibbaren Sende-/Empfangseinrichtung der Vorrichtung die entsprechenden Funkzellen im Mobilfunknetz eindeutig zugeordnet und bei Aufenthalt des mobilen Endgerätes in diesen Funkzellen ein vorzugsweise seitens des Mobilfunknetzes, der Vorrichtung und/oder des mobilen Endgerätes einstellbarer individueller Betriebsmodus vorgegeben. Durch Berücksichtigung des Aufenthaltsortes der im Mobilfunknetz betreibbaren Sende-/Empfangseinrichtung der Vorrichtung im Mobilfunknetz ist insbesondere die Nutzerindividualisierbarkeit von Diensten eines Mobilfunknetzes im Bereich von Kommunikationsverbindungen, insbesondere Verbindungen zum Austausch von Sprache und/oder Daten, beispielsweise im Rahmen von bzw. zu Diensten ins Internet, steigerbar. In Abhängigkeit des Aufenthaltsortes der im Mobilfunknetz betreibbaren Sende-/Empfangseinrichtung der Vorrichtung im Mobilfunknetz können so vorteilhafterweise an den Aufenthaltsort im Mobilfunknetz angepaßte Kommunikationsverbindungen und/oder -dienste über das Mobilfunknetz nutzbar gemacht werden, insbesondere für den geographischen Aufenthaltsort berücksichtigende bzw. seitens dieser berücksichtigbarer Anwendungen, insbesondere ortsspezifische Informationen und/oder Dienste nutzende Anwendungen, beispielsweise als sogenannte Kindersicherung für bestimmte vorgebbare Kommunikationsverbindungen, oder dergleichen. Vorteilhafterweise ist der Modus für eine andere Vergebührung für von dem mobilen Endgerät in das Mobilfunknetz gehende Kommunikationsverbindungen nutzbar. In einer weiteren vorteilhaften Ausgestaltung der Erfindung ist der Modus zum Betreiben der Sende-/Empfangseinrichtung der Vorrichtung im Mobilfunknetz nutzbar, so kann die Funktion der Sende-/Empfangseinrichtung der Vorrichtung im Mobilfunknetz beispielsweise gesperrt werden.

In einer weiteren Ausgestaltung der Erfindung weist der Funkversorgungsbereich für eine drahtlose Kommunikation im Kurzstreckenbereich einen definierten geographischen Aufenthaltsort auf, welcher vorteilhafterweise für eine drahtlose Kommunikation im Kurzstreckenbereich im Mobilfunknetz wenigstens einer den geographischen Aufenthaltsort entsprechend abdeckenden Funkzelle im Mobilfunknetz zuordbar ist.

Vorteilhafterweise ist der Aufenthalt des mobilen Endgerätes in dem Funkversorgungsbereich für eine drahtlose Kommunikation im Kurzstreckenbereich seitens des mobilen Endgerätes und/oder der Vorrichtung wiedergebbar, vorzugsweise optisch und/oder akustisch. Gemäß einem weiteren vorteilhaften Vorschlag der Erfindung ist eine über die im Mobilfunknetz betreibbare Sende-/Empfangseinrichtung der Vorrichtung erfolgende Kommunikationsverbindung seitens des mobilen Endgerätes und/oder seitens der Vorrichtung wiedergebbar, vorzugsweise optisch und/oder akustisch. So ist Nutzern signalisierbar, daß eine Kommunikation mit mitunter günstigerer Vergebührung möglich ist bzw. genutzt wird.

Erfindungsgemäß ist die im Mobilfunknetz betreibbare Sende-/Empfangseinrichtung der Vorrichtung ein mit einer SIM-Karte eines Mobilfunknetzbetreibers nutzbares GSM- und/oder UMTS-Modul.

Erfindungsgemäß ist vorgesehen, daß bei Aufenthalt des mobilen Endgerätes in dem Funkversorgungsbereich für eine drahtlose Kommunikation im Kurzstreckenbereich für Kommunikationsverbindungen mit diesem zwei Mobilfunkteilnehmerkennungen (IMSI's) und/oder Gerätekennungen (IMEI's) im Mobilfunknetz nutzbar sind. Dabei ist eine Mobilfunkteilnehmerkennung (IMSI) und/oder Gerätekennung (IMEI) die des mobilen Endgerätes und die andere Mobilfunkteilnehmerkennung (IMSI) und/oder Gerätekennung (IMEI) die der Sende-/Empfangseinrichtung der Vorrichtung. So kann beispielsweise seitens des Mobilfunknetzes erfasst werden, ob und wann sich ein mobiles Endgerät in dem Funkversorgungsbereich für eine drahtlose Kommunikation im Kurzstreckenbereich einer Vorrichtung aufgehalten hat sowie ob und welche Art Kommunikationsverbindungen aufgebaut wurden. Derartige Informationen sind seitens des Mobilfunknetzes vorteilhafterweise für eine Vergebührung von Kommunikationsverbindungen protokollierbar und/oder verarbeitbar.

Weiter ist erfindungsgemäß der SIM-Karte, der Mobilfunkteilnehmerkennung (IMSI) und/oder der Gerätekennung (IMEI) der Vorrichtung eine für Kommunikationsverbindungen nutzbare Rufnummer eines drahtgebundenen Fernsprechnetzes zuordbar. So kann ein sich in dem Funkversorgungsbereich für eine drahtlose Kommunikation im Kurzstreckenbereich aufhaltendes mobiles Endgerät vorteilhafterweise über eine für Kommunikationsverbindungen nutzbare Rufnummer eines drahtgebundenen Fernsprechnetzes erreicht werden und/oder seitens der Kommunikationspartner bei entsprechender Unterstützung dieses Dienstes die Rufnummer eines drahtgebundenen Fernsprechnetzes wiedergegeben werden.

Gemäß einem weiteren vorteilhaften Vorschlag der Erfindung erfolgt die drahtlose Kommunikation im Kurzstreckenbereich über Funk in dem Funkversorgungsbereich für eine drahtlose Kommunikation im Kurzstreckenbereich im ISM-Band, vorzugsweise mittels Bluetooth, WLAN, WPAN und/oder DECT unter Nutzung deren entsprechenden Protokolle für einen Verbindungsaufbau.

Vorteilhafterweise ist die Vorrichtung des erfindungsgemäßen Kommunikationssystems zum Laden eines Akkumulators wenigstens eines mobilen Endgerätes nutzbar, wozu die Vorrichtung vorzugsweise ein das mobile Endgerät schalenartig bzw. halbschalenartig aufnehmendes Gehäuse bzw. Gehäuseteil aufweist.

In einer weiteren vorteilhaften Ausgestaltung der Erfindung ist die Vorrichtung des erfindungsgemäßen Kommunikationssystems in einem mobilen Transportmittel, vorzugsweise einem Kraftfahrzeug, Flugzeug, Zug oder Schiff, angeordnet und erfindungsgemäß für Kommunikationsverbindungen in der vorstehend beschriebenen Art und Weise nutzbar.

Eine weitere vorteilhafte Ausgestaltung der Erfindung ist gekennzeichnet durch eine Authentifizierung der Nutzung der Vorrichtung durch Eingabe wenigstens einer Authentifizierungsinformation (PIN) seitens der Vorrichtung und/oder wenigstens eines mobilen Endgerätes, vorzugsweise durch Tasteneingabe seitens der Vorrichtung und/oder wenigstens eines mobilen Endgerätes.

Zur technischen **Lösung** der eingangs genannten Aufgabe wird ferner ein Verfahren entsprechend Anspruch 14 vorgeschlagen.

Ferner wird zur technischen **Lösung** der eingangs genannten Aufgabe ein Verfahren
entsprechend Anspruch 15 vorgeschlagen.

Bei Aufenthalt mehrerer mobiler Endgeräte in dem Funkversorgungsbereich für eine drahtlose Kommunikation im Kurzstreckenbereich werden seitens der Vorrichtung über das Mobilfunknetz eingehende Kommunikationsverbindungen vorteilhafterweise seitens aller sich in dem Funkversorgungsbereich für eine drahtlose Kommunikation im Kurzstreckenbereich aufhaltenden mobilen Endgeräte über eine drahtlose Kommunikation im Kurzstreckenbereich signalisiert und eine Kommunikationsverbindung mit dem mobilen Endgerät aufgebaut, welches zuerst die eingehende Kommunikationsverbindung annimmt, vorzugsweise durch Tasteneingabe seitens des mobilen Endgerätes.

Gemäß einer vorteilhaften Ausgestaltung der Erfindung wird bei den erfindungsgemäßen Verfahren der Aufenthalt des wenigstens einen mobilen Endgerätes in dem Funkversorgungsbereich für eine drahtlose Kommunikation im Kurzstreckenbereich seitens des Mobilfunknetzes erfasst, vorzugsweise mittels wenigstens einer Information seitens der Mobilfunkteilnehmerdatenbank des Mobilfunknetzes (Home Location Register (HLR)).

Vorteilhafterweise umfasst die Information eine Erreichbarkeitsinformation für an das wenigstens eine mobile Endgerät über das Mobilfunknetz gerichtete Kommunikationsverbindungen. So kann seitens des Mobilfunknetzes vorteilhafterweise bestimmt und berücksichtigt werden, auf welchem Wege eine Kommunikationsverbindung zu einem mobilen Endgerät aufgebaut werden soll, beispielsweise direkt über dieses und/oder über die Vorrichtung unter Nutzung der im Mobilfunknetz betreibbaren Sende-/Empfangseinrichtung derselben. Vorteilhafterweise werden an das wenigsten eine mobile Endgerät über das Mobilfunknetz gerichtete Kommunikationsverbindungen in Abhängigkeit von der Erreichbarkeitsinformation über die im Mobilfunknetz betreibbare Sende-/Empfangseinrichtung der Vorrichtung und/oder direkt über das wenigstens eine mobile Endgerät aufgebaut.

Eine weitere vorteilhafte Ausgestaltung der Erfindung sieht vor, daß die Information seitens des wenigstens mobilen Endgerätes und/oder der Vorrichtung erzeugt wird, vorzugsweise durch wenigstens eine vorgebbare Eingabe seitens des mobilen Endgerätes und/oder der Vorrichtung.

In einer bevorzugten Ausgestaltung der Erfindung wird die Information über die im Mobilfunknetz betreibbare Sende-/Empfangseinrichtung der Vorrichtung an das Mobilfunknetz übertragen. So ist seitens des Mobilfunknetzes direkt erkennbar, wie die Information weiter zu verwenden ist, beispielsweise für eine Vergebührung und/oder dergleichen Managementanwendungen seitens des Mobilfunknetzes.

In einer besonders vorteilhaften Ausgestaltung der Erfindung wird die Information automatisch bei Aufenthalt des wenigstens einen mobilen Endgerätes in dem Funkversorgungsbereich für eine drahtlose Kommunikation im Kurzstreckenbereich erzeugt und/oder übertragen.

Gemäß einem weiteren vorteilhaften Vorschlag der Erfindung wird seitens des Mobilfunknetzes wenigstens eine Funkzelle definiert, innerhalb deren die im Mobilfunknetz betreibbare Sende-/Empfangseinrichtung der Vorrichtung bei Aufenthalt derselben in der wenigstens einen definierten Funkzelle des Mobilfunknetzes mit wenigstens einem vorzugsweise individuell vorgebbaren Modus betrieben wird. Vorteilhafterweise wird der Modus zur Vergebührung der Kommunikation genutzt. Vorteilhafterweise wird der Modus zum Betreiben der Sende-/Empfangseinrichtung im Mobilfunknetz genutzt. Dazu ist der Modus vorteilhafterweise derart ausgestaltet, daß die Sende-/Empfangseinrichtung ausschließlich in der wenigstens einen definierten Funkzelle des Mobilfunknetzes bestimmungsgemäß funktionsfähig ist.

In einer weiteren vorteilhaften Ausgestaltung der Erfindung wird dem Funkversorgungsbereich für eine drahtlose Kommunikation im Kurzstreckenbereich ein definierter geographischer Aufenthaltsort zugewiesen, der wenigstens einer den geographischen Aufenthaltsort entsprechend abdeckenden Funkzelle im Mobilfunknetz entspricht. So kann vorteilhafterweise an bestimmten Aufenthaltsorten im Mobilfunknetz bei fester Installation der Vorrichtung an selbigem, beispielsweise am geographischen Ort des Wohnsitzes, des Arbeitsplatzes oder dergleichen vorbestimmbare geographische Orte eines Nutzers eine sogenannte "ZuHause-Funktion" für eine gesonderte Vergebührung im Mobilfunknetz realisiert werden.

Vorteilhafterweise wird der Aufenthalt des wenigstens einen mobilen Endgerätes in dem Funkversorgungsbereich für eine drahtlose Kommunikation im Kurzstreckenbereich seitens des mobilen Endgerätes und/oder der Vorrichtung wiedergegeben, vorzugsweise optisch und/oder akustisch.

In einer weiteren Ausgestaltung der Erfindung wird vorteilhafterweise eine über die im Mobilfunknetz betreibbare Sende-/Empfangseinrichtung der Vorrichtung erfolgende Kommunikationsverbindung seitens des wenigstens einen mobilen Endgerätes und/oder seitens der Vorrichtung wiedergegeben. Vorteilhafterweise ist so eine bereits über die im Mobilfunknetz betreibbare Sende-/Empfangseinrichtung der Vorrichtung erfolgende Kommunikationsverbindung eines mobilen Endgerätes seitens weiterer sich im Funkversorgungsbereich aufhaltender bzw. befindender und seitens der Vorrichtung angemeldeter mobiler Endgeräte als auch seitens der Vorrichtung selbst wiedergebbar bzw. anzeigbar. Dies ist insbesondere bei Beschränkungen in der Anzahl von über die im Mobilfunknetz betreibbare Sende-/Empfangseinrichtung der Vorrichtung möglichen Kommunikationsverbindungen mit dem Mobilfunknetz vorteilhaft.

In einer besonders vorteilhaften Ausgestaltung der Erfindung werden bei Aufenthalt des wenigstens einen mobilen Endgerätes in dem Funkversorgungsbereich für eine drahtlose Kommunikation im Kurzstreckenbereich für Kommunikationsverbindungen mit diesem zwei Mobilfunkteilnehmerkennungen (IMSI's) und/oder Gerätekennungen (IMEI's) im Mobilfunknetz genutzt.

In einer weiteren vorteilhaften Ausgestaltung der Erfindung wird über die im Mobilfunknetz betreibbare Sende-/Empfangseinrichtung der Vorrichtung erfolgenden Kommunikationsverbindungen eine Rufnummer eines drahtgebundenen Fernsprechnetzes zugeordnet, vorzugsweise mittels der wenigstens einen Information seitens der Mobilfunkteilnehmerdatenbank des Mobilfunknetzes (Home Location Register (HLR)), besonders bevorzugt unter Nutzung der Mobilfunkteilnehmerkennung (IMSI) und/oder der Gerätekennung (IMEI) der Vorrichtung.

Eine weitere vorteilhafte Ausgestaltung des erfindungsgemäßen Verfahrens ist gekennzeichnet durch eine Authentifizierung der Nutzung der Vorrichtung durch Eingabe wenigstens einer Authentifizierungsinformation (PIN) seitens der Vorrichtung und/oder wenigstens eines mobilen Endgerätes, vorzugsweise durch Tasteneingabe seitens der Vorrichtung und/oder wenigstens eines mobilen Endgerätes.

Gemäß einem Bespiel wird eine Vorrichtung zum Aufbau einer Kommunikationsverbindung zum Austausch von Informationen zwischen einem mobilen Endgerät und einem Mobilfunknetz eines erfindungsgemäßen Kommunikationssystems, welche mit dem Mobilfunknetz zu Kommunikationszwecken verbindbar und mit wenigstens einer Sende-/Empfangseinrichtung einen Funkversorgungsbereich für eine drahtlose Kommunikation im Kurzstreckenbereich bereitstellend ausgebildet ist, vorgeschlagen, welche für die Kommunikationsverbindung mit dem Mobilfunknetz eine im Mobilfunknetz betreibbare Sende-/Empfangseinrichtung aufweist.

Die Vorrichtung weist eine Einrichtung zur Erfassung des Aufenthalts wenigstens eines mobilen Endgerätes in dem Funkversorgungsbereich für eine drahtlose Kommunikation im Kurzstreckenbereich auf.

Vorteilhafterweise ist der Betriebsmodus der im Mobilfunknetz betreibbaren Sende-/Empfangseinrichtung der Vorrichtung individuell vorgebbar, vorzugsweise hinsichtlich des Aufenthalts derselben in wenigstens einer definierten Funkzelle des Mobilfunknetzes.

In einer weiteren vorteilhaften Ausgestaltung weist die Vorrichtung wenigstens eine Einrichtung zur optischen und/oder akustischen Wiedergabe des Aufenthalt eines mobilen Endgerätes in dem Funkversorgungsbereich für eine drahtlose Kommunikation im Kurzstreckenbereich auf. Dabei erfolgt die optische Wiedergabe vorteilhafterweise über eine Anzeigeeinrichtung, besonders bevorzugt ein Display, seitens der erfindungsgemäßen Vorrichtung und/oder die optische Wiedergabe vorteilhafterweise über einen Lautsprecher seitens der Vorrichtung.

In einer weiteren vorteilhaften Ausgestaltung weist die Vorrichtung wenigstens eine Einrichtung zur optischen und/oder akustischen Wiedergabe einer über die im Mobilfunknetz betreibbare Sende-/Empfangseinrichtung der Vorrichtung erfolgende Kommunikationsverbindung auf. Dabei erfolgt die optische Wiedergabe vorteilhafterweise über eine Anzeigeeinrichtung, besonders bevorzugt ein Display, seitens der erfindungsgemäßen Vorrichtung und/oder die optische Wiedergabe vorteilhafterweise über einen Lautsprecher seitens der Vorrichtung.

Vorteilhafterweise ist die im Mobilfunknetz betreibbare Sende-/Empfangseinrichtung der Vorrichtung ein mit einer SIM-Karte eines Mobilfunknetzbetreibers nutzbares GSM- und/oder UMTS-Modul.

Gemäß einer besonders bevorzugten Ausgestaltung ist die SIM-Karte fest in der Vorrichtung eingebaut oder integrativer Bestandteil des GSM- und/oder UMTS-Moduls.

Vorteilhafterweise ist die Vorrichtung derart ausgebildet, daß die drahtlose Kommunikation im Kurzstreckenbereich über Funk in dem Funkversorgungsbereich für eine drahtlose Kommunikation im Kurzstreckenbereich im ISM-Band erfolgt, vorzugsweise mittels Bluetooth, WLAN, WPAN und/oder DECT.

In einer weiteren vorteilhaften Ausgestaltung weist die Vorrichtung eine Einrichtung zum Laden eines Akkumulators wenigstens eines mobilen Endgerätes auf. Eine besonders bevorzugte

Ausgestaltung der Vorrichtung ist dabei gekennzeichnet durch ein wenigstens ein mobiles Endgerät schalenartig bzw. halbschalenartig aufnehmendes Gehäuse bzw. Gehäuseteil, welches vorzugsweise mit der Ladeeinrichtung zusammenwirkend ausgebildet ist, wenn das mobile Endgerät aufgenommen ist.

Eine weitere Ausgestaltung der Vorrichtung sieht vor, dass diese eine Tastatur zur Authentifizierung der Nutzung der Vorrichtung durch Eingabe wenigstens einer Authentifizierungsinformation (PIN) aufweist und/oder daß diese zur Authentifizierung der Nutzung der Vorrichtung mit wenigstens einem mobilen Endgerät verbindbar ist, vorzugsweise über die drahtlose Kommunikation im Kurzstreckenbereich über Funk, wobei die Eingabe wenigstens einer Authentifizierungsinformation (PIN) über das wenigstens eine mobile Endgerät erfolgt, vorzugsweise durch Tasteneingabe seitens des wenigstens einen mobilen Endgerätes.

Die Vorrichtung ist vorteilhafterweise zur Nutzung mit einem erfindungsgemäßen Verfahren in einem erfindungsgemäßen Kommunikationssystem ausgebildet.

Gemäß einem weiteren Beispiel wird ferner ein mobiles Endgerät zum Aufbau einer Kommunikationsverbindung zum Austausch von Informationen zwischen einem mobilen Endgerät und einem Mobilfunknetz eines erfindungsgemäßen Kommunikationssystems, welches in einem Mobilfunknetz mit einer aus Funkzellen aufgebauten zellularen Netzstruktur betreibbar ist und eine drahtlose Kommunikation im Kurzstreckenbereich über Funk ermöglichende Sende-/Empfangseinrichtung aufweist, vorgeschlagen, welches eine Einrichtung zur Erfassung des Aufenthalts in dem Funkversorgungsbereich für eine drahtlose Kommunikation im Kurzstreckenbereich der mit wenigstens einer Sende-/Empfangseinrichtung einen Funkversorgungsbereich für eine drahtlose Kommunikation im Kurzstreckenbereich bereitstellenden Vorrichtung aufweist.

In einer weiteren Ausgestaltung weist das mobile Endgerät wenigstens eine Einrichtung zur optischen und/oder akustischen Wiedergabe des Aufenthalts in dem Funkversorgungsbereich für eine drahtlose Kommunikation im Kurzstreckenbereich auf. Dabei erfolgt die optische Wiedergabe vorteilhafterweise über eine Anzeigeeinrichtung, besonders bevorzugt ein Display, des mobilen Endgerätes und/oder die optische Wiedergabe vorteilhafterweise über einen Lautsprecher des mobilen Endgerätes.

In einer weiteren Ausgestaltung weist das mobile Endgerät wenigstens eine Einrichtung zur optischen und/oder akustischen Wiedergabe einer über die im Mobilfunknetz betreibbare Sende-/Empfangseinrichtung der Vorrichtung erfolgenden Kommunikationsverbindung auf. Dabei erfolgt die optische Wiedergabe vorteilhafterweise über eine Anzeigeeinrichtung, besonders bevorzugt ein Display, des mobilen Endgerätes und/oder die optische Wiedergabe vorteilhafterweise über einen Lautsprecher des mobilen Endgerätes.

Vorteilhafterweise ist das mobile Endgerät derart ausgebildet, daß die drahtlose Kommunikation im Kurzstreckenbereich über Funk in dem Funkversorgungsbereich für eine drahtlose Kommunikation im Kurzstreckenbereich im ISM-Band erfolgt, vorzugsweise mittels Bluetooth, WLAN, WPAN und/oder DECT.

Das mobile Endgerät ist vorteilhafterweise zur Nutzung mit einem erfindungsgemäßen Verfahren und/oder einer erfindungsgemäßen Vorrichtung in einem erfindungsgemäßen Kommunikationssystem ausgebildet.

Das mobile Endgerät ist vorteilhafterweise ein in GSM- und/oder UMTS-Netzen nutzbares Mobilfunktelefon.

Weitere Einzelheiten, Merkmale und Vorteile der Erfindung werden nachfolgend anhand der in der Figur der Zeichnung dargestellten Ausführungsbeispiele näher erläutert. Dabei zeigt:

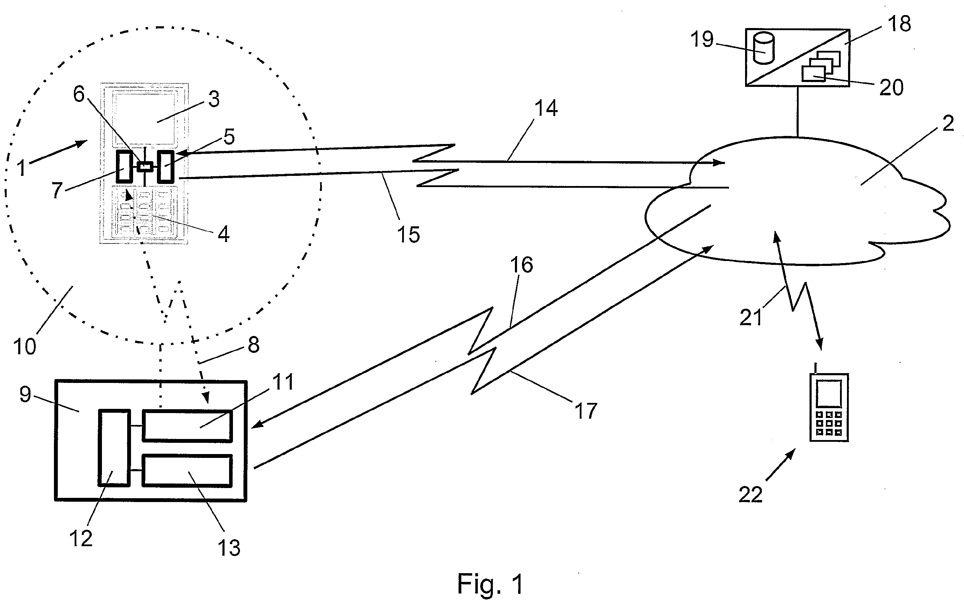

- Fig. 1: in einer schematischen Darstellung ein Ausführungsbeispiel für ein erfindungsgemäßes Kommunikationssystem zum Aufbau von Kommunikationsverbindungen zum Austausch von Informationen zwischen einem mobilen Endgerät und einem Mobilfunknetz.

Fig. 1 zeigt ein Kommunikationssystem zum Aufbau von Kommunikationsverbindungen zum Austausch von Informationen in Form von Sprache und/oder Daten zwischen einem mobilen Endgerät 1 und einem Mobilfunknetz 2 mit einer aus Funkzellen aufgebauten zellularen Netzstruktur.

Das mobile Endgerät 1 ist vorliegend ein in dem Mobilfunknetz 2 betreibbares Mobilfunktelefon 1, welches ein Display 3 als Anzeigeeinrichtung zur optischen Wiedergabe von Informationen und eine mehrere Tasten aufweisende Tastatur 4 als Eingabeeinrichtung zur Erfassung von Informationen und/oder Bedieneingaben aufweist. Zum Betrieb im Mobilfunknetz 2 weist das mobile Endgerät 1 eine gemäß den Verbindungsprotokollen des Mobilfunknetzes 2 betreibbare Sende-/Empfangseinrichtung 5 auf, welche dementsprechend von einer Steuereinrichtung 6 des mobilen Endgerätes 1 steuerbar ist. Weiter weist das mobile Endgerät 1 eine Sende-/Empfangseinrichtung 7 auf, welche für eine drahtlose Kommunikation im Kurzstreckenbereich über Funk, vorliegend gemäß dem sogenannten Bluetooth-Standard, ermöglichend ausgebildet ist. Die Sende-/Empfangseinrichtung 7 ist dabei vorliegend entsprechend von der Steuereinrichtung 6 des mobilen Endgerätes 1 steuerbar. Die Steuereinrichtung 6 steuert vorliegend ferner die Anzeigeeinrichtung 3 und die Eingabeeinrichtung 4 des mobilen Endgerätes 1.

Unter Nutzung der eine drahtlose Kommunikation im Kurzstreckenbereich über Funk ermöglichenden Sende-/Empfangseinrichtung 7 des mobilen Endgerätes 1 ist dieses über eine entsprechende Kommunikationsverbindung 8 mit einer Vorrichtung 9 verbindbar, sofern sich das mobile Endgerät 1 in dem in Fig. 1 mit dem Bezugszeichen 10 gekennzeichneten Funkversorgungsbereich 10 für eine drahtlose Kommunikation im Kurzstreckenbereich, vorliegend gemäß dem sogenannten Bluetooth-Standard, befindet.

Dazu weist die Vorrichtung 9 eine im Kurzstreckenbereich über Funk arbeitende Sende-/Empfangseinrichtung 11 auf, welche den Funkversorgungsbereich 10 für eine drahtlose Kommunikation im Kurzstreckenbereich bereitstellend ausgebildet ist. Zur entsprechenden Steuerung der den Funkversorgungsbereich 10 für eine drahtlose Kommunikation im Kurzstreckenbereich bereitstellenden Sende/Empfangseinrichtung 11 der Vorrichtung 9 weist diese eine Steuereinrichtung 12 auf, mittels welcher die Sende-/Empfangseinrichtung gemäß den Verbindungsprotokollen für eine drahtlose Kommunikation im Kurzstreckenbereich betreibbar ist. Weiter weist die Vorrichtung 9 eine in dem Mobilfunknetz 2 betreibbare Sende-/Empfangseinrichtung 13 auf, welche vorliegend von der Steuereinrichtung 12 gemäß den Verbindungsprotokollen gemäß den Standards des Mobilfunknetzes 2 gesteuert betreibbar ist.

Für Kommunikationsverbindungen zu Kommunikationspartnern, vorliegend beispielsweise einem in dem Mobilfunknetz 2 betreibbaren mobilen Endgerät 22 über Kommunikationsverbindungen 21 zwischen diesem und dem Mobilfunknetz 2 stehen bei Aufenthalt des mobilen Endgerätes 1 in dem Funkversorgungsbereich für eine drahtlose Kommunikation im Kurzstreckenbereich in Abhängigkeit der jeweiligen Ausgestaltung des erfindungsgemäßen Kommunikationssystems verschiedene Kommunikationsverbindungen 14, 15, 16 und/oder 17 zur Verfügung. Die Verwaltung und/oder das Management derartiger Kommunikationsverbindungen 14, 15, 16 und/oder 17 erfolgt dabei vorliegend seitens eines Kundeninformations- und/oder Abrechnungssystems 18 des das Mobilfunknetz 2 betreibenden Mobilfunknetzbetreibers. Dazu weist das Kundeninformations- und/oder Abrechnungssystem 18 eine in Fig. 1 symbolisch dargestellte Mobilfunkteilnehmerdatenbank des Mobilfunknetzes, ein sogenanntes Home Location Register (HLR) sowie verschiedene Verwaltungs- und/oder Managementanwendungen in Kombination mit der Mobilfunkteilnehmerdatenbank 19 ausführende Anwendungen 20 auf, welche seitens entsprechender Recheneinrichtungen des Kundeninformations- und/oder Abrechnungssystems 18 des Mobilfunknetzes 2 ausführbar sind.

Der Aufenthalt des mobilen Endgerätes 1 im Funkversorgungsbereich 10 wird bei Aufenthalt des mobilen Endgerätes 1 im Funkversorgungsbereich 10 seitens der Vorrichtung 9 automatisch gesteuert über die Sende-/Empfangseinrichtung 11 für eine drahtlose Kommunikation 8 im Kurzstreckenbereich erfaßt und eine drahtlose Kommunikationsverbindung 8 im Kurzstreckenbereich über Funk zwischen dem mobilen Endgerät 1 und der Vorrichtung 9 aufgebaut. Über die Kommunikationsverbindung 8 sind dabei zwischen dem mobilen Endgerät 1 und der Vorrichtung 9 neben Nutzinformationen in Form von Sprache und/oder Daten für die Kommunikationsverbindung 8 benötigte Signalisierungsinformationen austauschbar. Über die Kommunikationsverbindung 8 wird bei Vorliegen eines von dem mobilen Endgerät 1 ausgehenden Verbindungswunsches dieser Verbindungswunsch seitens der Vorrichtung 9 erfaßt. Die Steuereinrichtung 12 der Vorrichtung 9 erfaßt diesen Verbindungswunsch und steuert die im Mobilfunknetz 2 betreibbare Sende-/Empfangseinrichtung 13 der Vorrichtung 9 derart, daß diese den Verbindungswunsch in den Aufbau einer Kommunikationsverbindung 17 in das Mobilfunknetz 2 unter Nutzung entsprechender standardisierter Kommunikationsprotokolle des Mobilfunknetzes 2 umsetzt. Seitens des Mobilfunknetzes 2 erfolgt dann eine Kommunikationsverbindung zu dem von dem mobilen Endgerät 1 gewünschten Kommunikationspartner, vorliegend beispielsweise über die Kommunikationsverbindung 21 zum dem Kommunikationspartner 22, welcher in Fig. 1 symbolisch durch ein in dem Mobilfunknetz 2 betreibbares mobiles Endgerät 22 dargestellt ist.

Die von dem mobilen Endgerät ausgehende Kommunikationsverbindung setzt sich insofern aus der Kommunikationsverbindung 8 im Kurzstreckenbereich über Funk zu der entsprechenden Sende-/Empfangseinrichtung 11 der Vorrichtung 9, der Mobilfunkverbindung 17 zwischen der im Mobilfunknetz 2 betreibbaren Sende-/Empfangseinrichtung 13 der Vorrichtung 9 ins Mobilfunknetz 2 und der zwischen dem Mobilfunknetz 2 und dem im Mobilfunknetz 2 betreibbaren mobilen Endgerät 22 aufgebauten Kommunikationsverbindung 21 zusammen.

Ferner und/oder alternativ kann eine von dem mobilen Endgerät 1 ausgehende Kommunikationsverbindung zu dem Kommunikationspartner 22 bzw. dessen mobilen Endgerät über die in Fig. 1 mit 15 gekennzeichnete Kommunikationsverbindung zwischen dem mobilen Endgerät 1 und dem Mobilfunknetz 2 unter Nutzung der entsprechend im Mobilfunknetz 2 betreibbaren Sende-/Empfangseinrichtung 5 des mobilen Endgerätes 1 erfolgen. Die Kommunikationsverbindung zwischen dem mobilen Endgerät 1 und dem mobilen Endgerät 22 setzt sich dabei aus den über das Mobilfunknetz 2 erfolgenden Kommunikationsverbindungen 15 und 21 zusammen, entsprechend einer möglichen Kommunikationsverbindung bei Aufenthalt des mobilen Endgerätes außerhalb des Funkversorgungsbereichs 10.

Eine über das Mobilfunknetz 2 an das mobile Endgerät 1 bei Aufenthalt desselben in dem Funkversorgungsbereich 10 gerichtete Kommunikationsverbindung, beispielsweise ein eingehender Anruf, welcher von dem mobilen Endgerät 22 ausgehend über die Kommunikationsverbindung 21 zwischen diesem und dem Mobilfunknetz 2 erfolgt, kann bei entsprechender Konfiguration seitens des Kundeninformations- und/oder Abrechnungssystems 18 des Mobilfunknetzes 2 entweder direkt über die Mobilfunkverbindung 14 zwischen dem Mobilfunknetz 2 und der entsprechend im Mobilfunknetz gemäß standardisierten Protokollen des Mobilfunknetzes 2 betreibbaren Sende-/Empfangseinrichtung 5 des mobilen Endgerätes 1 erfolgen.

Ferner und/oder alternativ kann bei Aufenthalt des mobilen Endgerätes 1 in dem Funkversorgungsbereich 10 für eine drahtlose Kommunikation im Kurzstreckenbereich über Funk eine entsprechend an das mobile Endgerät 1 gerichtete Anforderung einer Kommunikationsverbindung über eine Mobilfunkverbindung 16 zwischen dem Mobilfunknetz 2 und der im Mobilfunknetz 2 betreibbaren Sende-/Empfangseinrichtung 13 der Vorrichtung 9 und die drahtlose Kommunikationsverbindung 8 zwischen der Vorrichtung 9 und dem mobilen Endgerät 1 im Funkversorgungsbereich 10 im Kurzstreckenbereich erfolgen. Dabei wird die Kommunikationsverbindung 8 zwischen der entsprechend im Kurzstreckenbereich über Funk, vorliegend gemäß Bluetooth-Standard, arbeitenden Sende-/Empfangseinrichtung 11 der Vorrichtung 9 und der entsprechend im Kurzstreckenbereich über Funk arbeitenden Sende-/Empfangseinrichtung 7 des mobilen Endgerätes 1 erfolgen. Eine entsprechend an das mobile Endgerät 1 von dem Kommunikationspartner bzw. dessen mobilen Endgeräts gerichtete Kommunikationsverbindung setzt sich somit aus den Mobilfunkverbindungen 21 und 16 und der drahtlosen Kommunikationsverbindung 8 im Kurzstreckenbereich innerhalb des Funkversorgungsbereichs 10 zusammen.

Die für den Aufbau von Kommunikationsverbindungen zwischen dem mobilen Endgerät 1 und dem Mobilfunknetz 2 je nach Ausgestaltung und/oder Konfiguration des erfindungsgemäßen Kommunikationssystems genutzten Kommunikationsverbindungen 14, 15, 16 und 17 sind als Mobilfunkverbindungen ausgebildet und seitens des Kundeninformations- und/oder Abrechnungssystems 18 des Mobilfunknetzes 2 über das mobile Endgerät 1, die Vorrichtung 9 und/oder dem Kundeninformations- und/oder Abrechnungssystem 18 des Mobilfunknetzes 2 zur Nutzung konfigurier- und/oder nutzbar. Dazu ist das Kundeninformations- und/oder Abrechnungssystem 18 des Mobilfunknetzes 2 vorliegend in der Lage, für entsprechende Kommunikationsverbindungen bei Bedarf und/oder Wunsch zwei Mobilfunkteilnehmerkennungen, sogenannte IMSI's, und/oder zwei Gerätekennungen, sogenannte IMEI's, zu nutzen, zum einen die des mobilen Endgerätes 1 bzw. dessen Sende-/Empfangseinrichtung 5 für direkt zwischen dem mobilen Endgerät 1 und dem Mobilfunknetz 2 erfolgende Kommunikationsverbindungen 14 und/oder 15 und zum anderen die der Vorrichtung 9 bzw. deren im Mobilfunknetz betreibbaren Sende- und/oder Empfangseinrichtungen 13 über erfolgende Kommunikationsverbindungen 16 und/oder 17 in Kombination mit einer Nutzung der Kommunikationsverbindung 8 im Funkversorgungsbereich 10 für eine drahtlose Kommunikation im Kurzstreckenbereich.

Vorliegend sind von dem mobilen Endgerät 1 und dem Mobilfunknetz 2 über die Vorrichtung 9 ablaufende Kommunikationsverbindungen 16 und 17 seitens des Kundeninformations- und/oder Abrechnungssystems 18 des Mobilfunknetzes 2 mittels einer seitens des Kundeninformations- und/oder Abrechnungssystems 18 der im Mobilfunknetz 2 betreibbaren Sende- und/oder Empfangseinrichtung 13 der Vorrichtung 9 bzw. der von der Sende-/Empfangseinrichtung 13 der Vorrichtung 9 genutzten SIM-Karte, welche vorzugsweise fest seitens der Sende-/Empfangseinrichtung installiert und/oder integriert ist, seitens des Kundeninformations- und/oder Abrechnungssystems 18 des Mobilfunknetzes 2 ein günstigerer Tarif für eine Vergebührung der Kommunikationsverbindungen 16 und/oder 17 als auch eine für Kommunikationsverbindungen eines drahtgebundenen Fernsprechnetzes nutzbare Rufnummer zugeordnet. Ein im Funkversorgungsbereich 10 für eine drahtlose Kommunikation im Kurzstreckenbereich sich aufhaltendes mobiles Endgerät 1 kann so über die Kommunikationsverbindung 8 quasi als ein in einem drahtgebundenen Fernsprechnetz nutzbares Endgerät mit in der Regel entsprechend günstigerer Vergebührung von Kommunikationsverbindungen betrieben werden. Vorteilhafterweise ist die Vorrichtung 9 dabei einem bestimmten geographischen Ort, vorteilhafterweise dem Wohnsitz oder dem Arbeitsplatz eines entsprechenden Nutzers, installiert und seitens des Kundeninformations- und/oder Abrechnungssystems genau erfaßt, daß die Sende- und/oder Empfangseinrichtung 13 der Vorrichtung 9 sich in der dem Aufenthaltsort entsprechenden Funkzelle des Mobilfunknetzes 2 für eine entsprechende Vergebührung befinden muß. Die Zuordnung des dem vorgebbaren Aufenthaltsort der Vorrichtung entsprechend dem Wohnsitz oder Arbeitsplatz des Nutzers entsprechenden geographischen Aufenthaltsort abdeckenden Funkzelle bzw. Funkzellen im Mobilfunknetz 2 sind seitens des Kundeninformations- und/oder Abrechnungssystems mittels entsprechender Lokalisierungsanwendungen provisionierbar, vorzugsweise unter Nutzung sogenannter GeoCoder oder dergleichen Anwendungen.

Nachfolgend werden anhand von zwei vorteilhaften Ausführungsbeispielen von Kommunikationsmöglichkeiten des erfindungsgemäßen Kommunikations-systems weitere Einzelheiten, Merkmale und Vorteile der Erfindung näher erläutert.

### Ausführungsbeispiel 1:

Bei dem ersten Ausführungsbeispiel weist die Vorrichtung 9 folgende Funktionalitäten auf:

### 1 Grundfunktionalitäten

GSM-Funktionalität: Die Vorrichtung 9 weist eine GSM-fähige Sende-/Empfangseinrichtung 13 mit SIM-Karte auf. Zur Aufnahme der SIM-Karte weist die Vorrichtung 9 einen SIM-Slot auf, in den eine SIM-Karte eingeführt und entfernt werden kann. Alternativ weist die Vorrichtung 9 ein sogenanntes SIM-Lock auf, in welches nur SIM-Karten eines bestimmten Typs eingelegt werden können.

BlueThooth Funktionalität: Die Vorrichtung 9 weist ein BlueTooth-Modul 11 auf, vorzugsweise gemäß 2.0 Standard, mit dem eine Verbindung zu einem BlueTooth-fähigen mobilen Endgerät 1, vorzugsweise einem in einem Mobilfunknetz 2 betreibbaren Mobilfunktelefon 1, aufgebaut werden kann. Die BlueTooth-Schnittstelle der Vorrichtung 9 ist zur Sicherung der Kompatibilität mit mobilen Endgeräten 1 dabei vorteilhafterweise derart implementiert, dass jedes von einem Mobilfunknetzbetreiber im Mobilfunknetz 2 zugelassene Endgerät 1 unterschiedlichster Hersteller mit der Vorrichtung 9 kommunizieren kann.

Display: Die Vorrichtung 9 weist ein vorzugsweise monochromes Display auf, auf welchem die nachfolgend beschriebenen Funktionen der Vorrichtung 9 wiedergebbar sind.

Keypad: Die Vorrichtung 9 weist ein Keypad (Tastatur) auf, mit welchem die nachfolgend beschriebenen Funktionen der Vorrichtung 9 durch entsprechende Betätigungseingaben vornehmbar sind.

Stromversorgung: Die Vorrichtung 9 wird über einen herkömmlichen Netzanschluss (Steckdose, 230 Volt) mit Strom versorgt.

### 2. Einschalten und Authentifizieren

Einschalten der Vorrichtung 9: Beim Einschalten der Vorrichtung 9 wird der Nutzer im Display der Vorrichtung 9 aufgefordert, die PIN der SIM-Karte der GSM-fähigen Sende-/Empfangseinrichtung 13 der Vorrichtung 9 einzugeben. Vor Eingabe der PIN leuchtet dabei eine Leuchtdiode an der Vorrichtung 9 rot auf. Nachdem die PIN erfolgreich über die das Keypad der Vorrichtung 9 eingegeben wurde leuchtet die Leuchtdiode an der Vorrichtung 9 grün.

Authentifizierung Endgerät 1: Wenn sich ein mobiles Endgerät 1 über BlueTooth an der Vorrichtung 9 anmeldet, wird dies dem Nutzer durch ein Signal der Vorrichtung 9 mitgeteilt. Der Nutzer sieht auf dem Display der Vorrichtung 9 beispielsweise den Namen des mobilen Endgerätes 1. Der Nutzer hat dann folgende Optionen, die durch Auswahleingabe über das Keypad der Vorrichtung 9 auswählbar und einstellbar sind:
- Mobiles Endgerät 1 dauerhaft zulassen: Das mobile Endgerät 1 kann In einer Liste dauerhaft zugelassener Endgeräte 1 aufgenommen werden. Das mobile Endgerät 1 meldet sich dann zukünftig automatisch an der Vorrichtung 9 an, ohne dass der Nutzer des mobilen Endgerätes 1 dazu aufgefordert oder gefragt wird.
- Mobiles Endgerät 1 temporär zulassen: Bei Auswahl dieser Option, hat der Nutzer die Möglichkeit anzugeben, wie viele Stunden dieses mobile Endgerät 1 über die Vorrichtung 9 kommunizieren kann.

Entfernen eines mobilen Endgerätes 1: Der Nutzer kann jeder Zeit ein temporär oder dauerhaft angemeldetes mobiles Endgerät aus der Liste der zugelassenen mobilen Endgeräte 1 durch entsprechende Auswahleingabe über das Keypad der Vorrichtung 9 entfernen.

### 3. Ergänzende Funktionalitäten

Ladestation: Die Vorrichtung 9 verfügt über eine integrierte Ladestation, über die alle mobilen Endgeräte 1 ausgewählter Hersteller geladen werden können. Aufgrund mitunter unterschiedlicher Formfaktoren der mobilen Endgeräte 1 sind entsprechende Adapter zur Anpassung vorgesehen.

Die quasi als Basisstation fungierende Vorrichtung 9 entspricht bzw. ähnelt hinsichtlich ihrer optischen Aufmachung grundsätzlich der Aufmachung einer Basisstation eines DECT-Telefons.

### 4. Ein angemeldetes Endgerät

Ausgehende Kommunikationsverbindungen/Gespräche: Ausgehende Kommunikationsverbindungen bzw. Gespräche im BlueTooth-Funkversorgungsbereich 10 der Vorrichtung 9 erfolgen ausschließlich über die Vorrichtung 9.

Eingehende Kommunikationsverbindungen/Gespräche (belegt): Wenn ein Nutzer über die im Mobilfunknetz 2 betreibbare Sende-/Empfangseinrichtung 13 der Vorrichtung 9 telefoniert, gelten die klassischen Rufumleitungsregeln, das heißt in der Regel wird der Anrufer auf die sogenannte Mobilbox der Sende-/Empfangseinrichtung 13 der Vorrichtung 9 umgeleitet.

Eingehende Kommunikationsverbindungen/Gespräche (frei): Das angemeldete mobile Endgerät 1 signalisiert eingehende Kommunikationsverbindungen, insbesondere durch Klingeln. Die Kommunikationsverbindung bzw. das Gespräch erfolgt von bzw. mit dem Nutzer, der die Kommunikationsverbindung bzw. das Gespräch als erster annimmt.

Eingehende Kommunikationsverbindungen/Gespräche (kein Nutzer anwesend): Wenn sich der Nutzer nicht im BlueTooth-Funkversorgungsbereich 10 der Vorrichtung 9 befindet, gelten die klassischen Rufumleitungsregeln das heißt in der Regel wird der Anrufer auf die sogenannte Mobilbox der Sende-/Empfangseinrichtung 13 der Vorrichtung 9 umgeleitet.

### 5. Mehrere angemeldete Endgeräte

Mehrere Endgeräte 1: Es können sich vorzugsweise bis zu fünf mobile Endgeräte 1 bei bzw. an der Vorrichtung 9 anmelden.

Ausgehende Kommunikationsverbindungen/Gespräche: Es kann jeweils nur eine ausgehende Kommunikationsverbindung bzw. ausgehendes Gespräch geführt werden. Wenn mehrere Endgeräte 1 angemeldet sind, können die anderen Endgeräte 1 ausgehende Kommunikationsverbindungen bzw. Gespräche ausschließlich direkt über das Mobilfunknetz 2 mittels deren Sende-/Empfangseinrichtung 5 durchführen. Ferner erlischt seitens des Displays 3 der anderen mobilen Endgeräte 1 das ansonsten bei Aufenthalt im BlueTooth-Funkversorgungsbereich 10 im Display 3 der mobilen Endgeräte 1 wiedergegebene "ZuHause"-Zeichen.

Eingehende Kommunikationsverbindungen/Gespräche (belegt): Wenn ein Nutzer über die im Mobilfunknetz 2 betreibbare Sende-/Empfangseinrichtung 13 der Vorrichtung 9 telefoniert, gelten die klassischen Rufumleitungsregeln, das heißt in der Regel wird der Anrufer auf die sogenannte Mobilbox der Sende-/Empfangseinrichtung 13 der Vorrichtung 9 umgeleitet.

Eingehende Kommunikationsverbindungen/Gespräche (frei): Alle angemeldeten Endgeräte 1 die sich im BlueTooth-Funkversorgungsbereich 10 der Vorrichtung 9 befinden signalisieren eingehende Kommunikationsverbindungen, insbesondere durch Klingeln. Die Kommunikationsverbindung bzw. das Gespräch erfolgt von bzw. mit dem Nutzer, der die Kommunikationsverbindung bzw. das Gespräch als erster annimmt.

Eingehende Kommunikationsverbindungen/Gespräche (kein Nutzer anwesend): Wenn sich kein Nutzer im BlueTooth-Funkversorgungsbereich 10 der Vorrichtung 9 befindet, gelten die klassischen Rufumleitungsregeln das heißt in der Regel wird der Anrufer auf die sogenannte Mobilbox der Sende-/Empfangseinrichtung 13 der Vorrichtung 9 umgeleitet.

Bei dem ersten Ausführungsbeispiel weisen die mobilen Endgeräte 1 (Mobilfunktelefone 1) folgende Funktionalitäten auf:

### 1 Grundfunktionalitäten der mobilen Endgeräte 1

Kontaktaufnahme zu Vorrichtung 9: Die Kontaktaufnahme zu der Vorrichtung 9 ist ein Hauptmenüpunkt seitens des Bedienungsmenüs des Endgerätes 1 und vorzugsweise mit einer speziellen Taste des Endgerätes 1 mit entsprechender Beschriftung auswählbar bzw. anwählbar. Unter diesem Menüpunkt finden sich die Punkte:
- Vorrichtung 9 suchen: Das mobile Endgerät 1 prüft, ob sich im BlueTooth-Funkversorgungsbereich 10 eine entsprechende Vorrichtung 9 befindet.
- Anmelden: Bei erfolgreicher Suche wird angezeigt, dass eine Vorrichtung 9 gefunden wird. Der Nutzer wird darauf hingewiesen, dass eine Bestätigung durch die Vorrichtung 9 erfolgen muss. Nach erfolgreicher Bestätigung durch die Vorrichtung 9 wird der Nutzer entsprechend darauf hingewiesen, ob er dauerhaft oder temporär zur Nutzung der Vorrichtung 9 zugelassen wurde.
- Liste angemeldeter Vorrichtungen 9: In dieser Liste werden alle Vorrichtungen 9 angezeigt, bei denen das mobile Endgerät 1 angemeldet ist.
- Abmelden: der Nutzer hat die Möglichkeit sich bei einem oder mehreren Vorrichtungen 9 abzumelden.

### 2. Telefonie

Telefonie innerhalb des BlueTooth-Funkversorgungsbereichs10: Ist der Nutzer eines mobilen Endgerätes 1 erfolgreich bei einer Vorrichtung 9 angemeldet, so kann er innerhalb des Funkversorgungsbereichs 10 der Vorrichtung 9 über die BlueTooth-Verbindung 8 über die Vorrichtung 9 Kommunikationsverbindungen in das Mobilfunknetz 2 aufbauen, insbesondere telefonieren. Dabei erfolgt die Kommunikationsverbindung zu den Tarifkonditionen die bei dem Mobilfunknetzbetreiber der SIM-Karte der Vorrichtung 9 zugeordnet sind. Im Display 3 des mobilen Endgerätes 1 wird durch ein entsprechendes Symbol angezeigt, dass sich der Nutzer des mobilen Endgerätes 1 im Funkversorgungsbereich 10 befindet, beispielsweise durch ein symbolisches Haus oder dergleichen Symbol für die "ZuHause"-Funktionalität.

Verlassen des BlueTooth-Funkversorgungsbereichs10: Wenn der Nutzer des mobilen Endgerätes 1 den Funkversorgungsbereich 10 der Vorrichtung 9 verlässt, erfolgt vorteilhafterweise automatisch ein sogenanntes Handover an das Mobilfunknetz 2. Der Nutzer des mobilen Endgerätes wird vorteilhafterweise durch ein akustisches Signal auf das Verlassen des Funkversorgungsbereiches 10 hingewiesen. Das "ZuHause"-Zeichen erlischt seitens des Displays 3 des mobilen Endgerätes 1.

Betreten des BlueTooth-Funkversorgungsbereichs10: Wenn der Nutzer des mobilen Endgerätes 1 den Funkversorgungsbereich 10 der Vorrichtung 9 betritt, so erfolgt vorteilhafterweise automatisch ein sogenanntes Handover an bzw. in den BlueTooth-Funkversorgungsbereich 10 der Vorrichtung 9. Der Nutzer wird vorteilhafterweise durch ein akustisches Signal auf das Betreten des Funkversorgungsbereich 10 der Vorrichtung 9 hingewiesen. Vorteilhafterweise unterscheidet sich das akustische Signal für den Eintritt in den Funkversorgungsbereich 10 der Vorrichtung 9 von dem akustischen Signal für das Verlassen des Funkversorgungsbereichs 10 der Vorrichtung 9. Seitens des Displays 3 des mobilen Endgerätes 1 wird ein "ZuHause"-Zeichen oder dergleichen Symbol wiedergegeben.

### 3. SMS, Daten

Das Versenden von SMS bzw. Daten mittels GPRS erfolgt im Funkversorgungsbereich 10 der Vorrichtung 9 vorteilhafterweise ebenfalls über die Vorrichtung 9 zu den Tarifkonditionen der SIM in der Vorrichtung 9.

### Ausführungsbeispiel 2:

Bei dem zweiten Ausführungsbeispiel ist der Funktionsumfang der Vorrichtung 9 minimiert und die mobilen Endgeräte 1 zur Realisierung bzw. Umsetzung von Funktionen umfangreicher ausgebildet.

Bei dem zweiten Ausführungsbeispiel weist die Vorrichtung 9 folgende Funktionalitäten auf:

### 1 Grundfunktionalitäten

GSM-Funktionalität: Die Vorrichtung 9 weist eine GSM-fähige Sende-/Empfangseinrichtung 13 mit SIM-Karte auf. Zur Aufnahme der SIM-Karte weist die Vorrichtung 9 einen SIM-Slot auf, in den eine SIM-Karte eingeführt und entfernt werden kann. Alternativ weist die Vorrichtung 9 ein sogenanntes SIM-Lock auf, in welches nur SIM-Karten eines bestimmten Typs eingelegt werden können.

BlueThooth Funktionalität: Die Vorrichtung 9 weist ein BlueTooth-Modul 11 auf, vorzugsweise gemäß 2.0 Standard, mit dem eine Verbindung zu einem BlueTooth-fähigen mobilen Endgerät 1, vorzugsweise einem in einem Mobilfunknetz 2 betreibbaren Mobilfunktelefon 1, aufgebaut werden kann. Die BlueTooth-Schnittstelle der Vorrichtung 9 ist zur Sicherung der Kompatibilität mit mobilen Endgeräten 1 dabei vorteilhafterweise derart implementiert, dass jedes von einem Mobilfunknetzbetreiber im Mobilfunknetz 2 zugelassene Endgerät 1 unterschiedlichster Hersteller mit der Vorrichtung 9 kommunizieren kann.

Stromversorgung: Die Vorrichtung 9 wird über einen herkömmlichen Netzanschluss (Steckdose, 230 Volt) mit Strom versorgt.

### 2. Einschalten und Authentifizieren

Einschalten der Vorrichtung 9: Nachdem der Nutzer die Vorrichtung 9 eingeschaltet hat, ist diese aktiv. Eingehende und abgehende Kommunikationsverbindungen bzw. Gespräche können aber erst erfolgen, nachdem durch ein externes Endgerät 1 (Mobilfunktelefon 1) die PIN der SIM-Karte der GSM-fähigen Sende-/Empfangseinrichtung 13 der Vorrichtung 9 eingegeben wurde (Initiales Scharfschalten der Vorrichtung 9).

Initiales Scharfschalten der Vorrichtung 9: Nachdem die Vorrichtung 9 eingeschaltet wurde, erkennt diese externe mobile Endgeräte 1 (Mobilfunktelefone 1) über die BlueTooth-Verbindung 8, wenn sich diese im BlueTooth-Funkversorgungsbereich 10 der Vorrichtung 9 aufhalten. Über das BlueTooth kann ein mobiles Endgerät 1 eine Verbindung zu der Vorrichtung 9 aufbauen. Ist die BlueTooth-Verbindung aufgebaut, so wird der Nutzer des mobilen Endgerätes 1 aufgefordert, die PIN der SIM-Karte in der Vorrichtung 9 einzugeben. Ist die PIN-Eingabe erfolgt, ist die Vorrichtung 9 für ausgehende und eingehende Kommunikationsverbindungen bzw. Gespräche scharf geschaltet. Vorteilhafterweise ist die MSISDN des mobilen Endgerätes 1, über die die Vorrichtung 9 so scharfgeschaltet wurde die Master-MSISDN (SIM 1). Das mobile Endgerät 1 mit der SIM 1 muss sich vorteilhafterweise dann zukünftig nicht mehr erneut anmelden, sondern wird automatisch von der Vorrichtung 9 als "authentifiziert" erkannt. Nur über das mobile Endgerät 1 mit der SIM 1 können folgende Einstellungen der Vorrichtung 9 vorgenommen werden:
- PIN ändern
- Einstellung, wie viele weitere mobile Endgeräte 1 sich bei der Vorrichtung 9 anmelden dürfen bzw. können
- Weitere, bereits bzw. schon angemeldete Geräte blocken (Fraud Prevention)

Vom Strom trennen: Nachdem die Vorrichtung 9 einmal initial scharf geschaltet wurde, muss auch bei einer Trennung vom Strom die PIN nicht erneut eingegeben werden, da sich die Vorrichtung 9 merkt, welche Endgeräte 1 (MSISDNs) schon angemeldet sind und welches Endgerät die Master-MSISDN ist (SIM 1).

Weitere Endgeräte 1: Ist die Vorrichtung 9 "scharf geschaltet", so können sich, sofern durch die Einstellung der Vorrichtung 9 zugelassen, weitere Endgeräte 1 bei der Vorrichtung 9 anmelden (SIM 2 bis SIM n). Auch hier wird der Nutzer des jeweiligen SIM aufgefordert die PIN der SIM der Vorrichtung 9 über das jeweilige mobile Endgerät 1 einzugeben. Nachdem die PIN der Vorrichtung 9 einmal richtig über das jeweilige mobile Endgerät 1 eingegeben wurde, muss diese zukünftig nicht erneut beim Betreten des Funkversorgungsbereichs 10 angegeben werden, es sei denn, dass über die Haupt-SIM (SIM 1) die PIN der Vorrichtung 9 geändert oder der entsprechende Nutzer bzw. dessen mobiles Endgerät 1 seitens einer Nutzung der Vorrichtung 9 geblockt bzw. gesperrt wurde.

Authentifizierung Endgerät 1: Die Vorrichtung 9 hat hier nur eine passive Rolle.

Entfernen eines Endgerätes 1: Die Vorrichtung 9 hat hier nur eine passive Rolle.

SIM-PIN ändern: Der Nutzer hat die Möglichkeit über die externe MSISDN 1 (SIM 1) die PIN der SIM in der Vorrichtung 9 zu ändern. In diesem Fall werden alle Endgeräte 1, die sich bis dahin bei der Box angemeldet haben abgelehnt, bis diese neu angemeldet werden.

### 3. Ergänzende Funktionalitäten

Ladestation: Die Vorrichtung 9 verfügt über eine integrierte Ladestation, über die alle mobilen Endgeräte 1 ausgewählter Hersteller geladen werden können. Aufgrund mitunter unterschiedlicher Formfaktoren der mobilen Endgeräte 1 sind entsprechende Adapter zur Anpassung vorgesehen.

Die quasi als Basisstation fungierende Vorrichtung 9 entspricht bzw. ähnelt hinsichtlich ihrer optischen Aufmachung grundsätzlich der Aufmachung einer Basisstation eines DECT-Telefons.

### 4. Ein angemeldetes Endgerät

Ausgehende Kommunikationsverbindungen/Gespräche: Ausgehende Kommunikationsverbindungen bzw. Gespräche im BlueTooth-Funkversorgungsbereich 10 der Vorrichtung 9 erfolgen ausschließlich über die Vorrichtung 9.

Eingehende Kommunikationsverbindungen/Gespräche (belegt): Wenn ein Nutzer über die im Mobilfunknetz 2 betreibbare Sende-/Empfangseinrichtung 13 der Vorrichtung 9 telefoniert, gelten die klassischen Rufumleitungsregeln, das heißt in der Regel wird der Anrufer auf die sogenannte Mobilbox der Sende-/Empfangseinrichtung 13 der Vorrichtung 9 umgeleitet.

Eingehende Kommunikationsverbindungen/Gespräche (frei): Alle angemeldeten und sich im Funkversorgungsbereich 10 der Vorrichtung 9 befindlichen mobilen Endgeräte 1 signalisiert eingehende Kommunikationsverbindungen, insbesondere durch Klingeln. Die Kommunikationsverbindung bzw. das Gespräch erfolgt von bzw. mit dem Nutzer, der die Kommunikationsverbindung bzw. das Gespräch als erster annimmt.

Eingehende Kommunikationsverbindungen/Gespräche (kein Nutzer anwesend): Wenn sich der Nutzer nicht im BlueTooth-Funkversorgungsbereich 10 der Vorrichtung 9 befindet, gelten die klassischen Rufumleitungsregeln das heißt in der Regel wird der Anrufer auf die sogenannte Mobilbox der Sende-/Empfangseinrichtung 13 der Vorrichtung 9 umgeleitet.

### 5. Mehrere angemeldete Endgeräte

Mehrere Endgeräte 1: Es können sich vorzugsweise bis zu fünf mobile Endgeräte 1 bei bzw. an der Vorrichtung 9 anmelden.

Ausgehende Kommunikationsverbindungen/Gespräche: Es kann jeweils nur eine ausgehende Kommunikationsverbindung bzw. ausgehendes Gespräch geführt werden. Wenn mehrere Endgeräte 1 angemeldet sind, können die anderen Endgeräte 1 ausgehende Kommunikationsverbindungen bzw. Gespräche ausschließlich direkt über das Mobilfunknetz 2 mittels deren Sende-/Empfangseinrichtung 5 durchführen. Ferner erlischt seitens des Displays 3 der anderen mobilen Endgeräte 1 das ansonsten bei Aufenthalt im BlueTooth-Funkversorgungsbereich 10 im Display 3 der mobilen Endgeräte 1 wiedergegebene "ZuHause"-Zeichen. Alternativ wird ein anderes Zeichen bzw. Symbol angezeigt, dass deutlich macht, dass die Leitung für Kommunikationsverbindungen ins Mobilfunknetz 2 über die Sende-/Empfangsvorrichtung 13 der Vorrichtung 9 gerade besetzt ist. In diesem Fall erfolgt eine direkte Mobilfunknetzverbindung vorteilhafterweise automatisch über die Sende-/Empfangseinrichtung 5 des jeweiligen mobilen Endgerätes 1 zu den für dieses geltenden Gebührentarifen.

Eingehende Kommunikationsverbindungen/Gespräche (belegt): Wenn ein Nutzer über die im Mobilfunknetz 2 betreibbare Sende-/Empfangseinrichtung 13 der Vorrichtung 9 telefoniert, gelten die klassischen Rufumleitungsregeln, das heißt in der Regel wird der Anrufer auf die sogenannte Mobilbox der Sende-/Empfangseinrichtung 13 der Vorrichtung 9 umgeleitet.

Eingehende Kommunikationsverbindungen/Gespräche (frei): Alle angemeldeten Endgeräte 1 die sich im BlueTooth-Funkversorgungsbereich 10 der Vorrichtung 9 befinden signalisieren eingehende Kommunikationsverbindungen, insbesondere durch Klingeln. Die Kommunikationsverbindung bzw. das Gespräch erfolgt von bzw. mit dem Nutzer, der die Kommunikationsverbindung bzw. das Gespräch als erster annimmt.

Eingehende Kommunikationsverbindungen/Gespräche (kein Nutzer anwesend): Wenn sich kein Nutzer im BlueTooth-Funkversorgungsbereich 10 der Vorrichtung 9 befindet, gelten die klassischen Rufumleitungsregeln das heißt in der Regel wird der Anrufer auf die sogenannte Mobilbox der Sende-/Empfangseinrichtung 13 der Vorrichtung 9 umgeleitet.

Bei dem zweiten Ausführungsbeispiel weisen die mobilen Endgeräte 1 (Mobilfunktelefone 1) folgende Funktionalitäten auf:

### 1 Grundfunktionalitäten der mobilen Endgeräte 1

Kontaktaufnahme zu Vorrichtung 9: Die Kontaktaufnahme zu der Vorrichtung 9 ist ein Hauptmenüpunkt seitens des Bedienungsmenüs des Endgerätes 1 und vorzugsweise mit einer speziellen Taste des Endgerätes 1 mit entsprechender Beschriftung auswählbar bzw. anwählbar. Unter diesem Menüpunkt finden sich die Punkte:
- Vorrichtung 9 suchen: Das mobile Endgerät 1 prüft, ob sich im BlueTooth-Funkversorgungsbereich 10 eine entsprechende Vorrichtung 9 befindet.
- Anmelden: Bei erfolgreicher Suche wird angezeigt, dass eine Vorrichtung 9 gefunden wird. Der Nutzer des mobilen Endgerätes 1 muss sich durch die Eingabe einer PIN gegenüber der Vorrichtung 9 authentifizieren. Im optionalen Idealfall entspricht die PIN der SIM-PIN der SIM-Karte, die sich in der Vorrichtung 9 befindet.
- PIN ändern: Wird die PIN der SIM-Karte der Vorrichtung 9 geändert, werden automatisch alle bis dahin bei der Vorrichtung 9 angemeldeten Endgeräte 1 für eine Nutzung der Vorrichtung 9 abgelehnt. Diese Endgeräte 1 müssen sich dann für eine Nutzung der Vorrichtung 9 neu anmelden. Die PIN der SIM-Karte in der Vorrichtung 9 kann nur von der Haupt-MSISDN (SIM 1) geändert werden.
- Liste angemeldeter Vorrichtungen 9: In dieser Liste werden alle Vorrichtungen 9 angezeigt, bei denen das mobile Endgerät 1 angemeldet ist.
- Abmelden: der Nutzer hat die Möglichkeit sich bei einem oder mehreren Vorrichtungen 9 abzumelden.

### 2. Telefonie

Telefonie innerhalb des BlueTooth-Funkversorgungsbereichs10: Ist der Nutzer eines mobilen Endgerätes 1 erfolgreich bei einer Vorrichtung 9 angemeldet, so kann er innerhalb des Funkversorgungsbereichs 10 der Vorrichtung 9 über die BlueTooth-Verbindung 8 über die Vorrichtung 9 Kommunikationsverbindungen in das Mobilfunknetz 2 aufbauen, insbesondere telefonieren. Dabei erfolgt die Kommunikationsverbindung zu den Tarifkonditionen die bei dem Mobilfunknetzbetreiber der SIM-Karte der Vorrichtung 9 zugeordnet sind. Im Display 3 des mobilen Endgerätes 1 wird durch ein entsprechendes Symbol angezeigt, dass sich der Nutzer des mobilen Endgerätes 1 im Funkversorgungsbereich 10 befindet, beispielsweise durch ein symbolisches Haus oder dergleichen Symbol für die "Zu Hause"-Funktionalität.

Verlassen des BlueTooth-Funkversorgungsbereichs10: Wenn der Nutzer des mobilen Endgerätes 1 den Funkversorgungsbereich 10 der Vorrichtung 9 verlässt, erfolgt vorteilhafterweise automatisch ein sogenanntes Handover an das Mobilfunknetz 2. Der Nutzer des mobilen Endgerätes wird vorteilhafterweise durch ein akustisches Signal auf das Verlassen des Funkversorgungsbereiches 10 hingewiesen. Das "ZuHause"-Zeichen erlischt seitens des Displays 3 des mobilen Endgerätes 1.

Betreten des BlueTooth-Funkversorgungsbereichs10: Wenn der Nutzer des mobilen Endgerätes 1 den Funkversorgungsbereich 10 der Vorrichtung 9 betritt, so erfolgt vorteilhafterweise automatisch ein sogenanntes Handover an bzw. in den BlueTooth-Funkversorgungsbereich 10 der Vorrichtung 9. Der Nutzer wird vorteilhafterweise durch ein akustisches Signal auf das Betreten des Funkversorgungsbereich 10 der Vorrichtung 9 hingewiesen. Vorteilhafterweise unterscheidet sich das akustische Signal für den Eintritt in den Funkversorgungsbereich 10 der Vorrichtung 9 von dem akustischen Signal für das Verlassen des Funkversorgungsbereichs 10 der Vorrichtung 9. Seitens des Displays 3 des mobilen Endgerätes 1 wird ein "ZuHause"-Zeichen oder dergleichen Symbol wiedergegeben.

### 3. SMS, Daten

Das Versenden von SMS bzw. Daten mittels GPRS erfolgt im Funkversorgungsbereich 10 der Vorrichtung 9 vorteilhafterweise ebenfalls über die Vorrichtung 9 zu den Tarifkonditionen der SIM in der Vorrichtung 9.

Die in der Zeichnung dargestellten und im weiteren beschriebenen Ausführungsbeispiele dienen zur Erläuterung der in den Ansprüchen definierten Erfindung.

### Bezugszeichenliste

- 1: mobiles Endgerät/Mobilfunktelefon
- 2: Mobilfunknetz
- 3: Anzeigeeinrichtung/Display (mobiles Endgerät (1))
- 4: Eingabeeinrichtung/Tastatur (mobiles Endgerät (1))
- 5: Sende-/Empfangseinrichtung für Mobilfunk (mobiles Endgerät (1))
- 6: Steuereinrichtung (mobiles Endgerät (1))
- 7: Sende-/Empfangseinrichtung für Bluetooth (mobiles Endgerät (1))
- 8: Kommunikationsverbindung Bluetooth
- 9: Vorrichtung
- 10: Funkversorgungsbereich Bluetooth
- 11: Sende-/Empfangseinrichtung für Bluetooth (Vorrichtung (9))
- 12: Steuereinrichtung (Vorrichtung (9))
- 13: Sende-/Empfangseinrichtung für Mobilfunk (Vorrichtung (9))
- 14: Kommunikationsverbindung Mobilfunk
- 15: Kommunikationsverbindung Mobilfunk
- 16: Kommunikationsverbindung Mobilfunk
- 17: Kommunikationsverbindung Mobilfunk
- 18: Kundeninformations- und/oder Abrechungssystem (Mobilfunknetz (2))
- 19: Mobilfunkteilnehmerdatenbank/HLR (Mobilfunknetz (2))
- 20: Koordinations- und/oder Managementanwendungen (Mobilfunknetz (2))
- 21: Kommunikationsverbindung Mobilfunk
- 22: mobiles Endgerät/Mobilfunktelefon Kommunikationspartner

## Patentansprüche

1. Kommunikationssystem zum Aufbau einer Kommunikationsverbindung (14, 15, 16, 17) zum Austausch von Informationen zwischen wenigstens einem mobilen Endgerät (1) und einem Mobilfunknetz (2), mit einem Mobilfunknetz (2) mit einer aus Funkzellen aufgebauten zellularen Netzstruktur,
einer mit dem Mobilfunknetz (2) zu Kommunikationszwecken verbindbaren, mit wenigstens einer Sende-/Empfangseinrichtung (11) einen Funkversorgungsbereich (10) für eine drahtlose Kommunikation (8) im Kurzstreckenbereich bereitstellenden Vorrichtung (9), und wenigstens einem in dem Mobilfunknetz (2) betreibbaren mobilen Endgerät (1), welches eine eine drahtlose Kommunikation (8) im Kurzstreckenbereich über Funk ermöglichende Sende-/Empfangseinrichtung (7) aufweist,
wobei die Vorrichtung (9) für die Kommunikationsverbindung (16, 17) mit dem Mobilfunknetz (2) eine im Mobilfunknetz (2) betreibbare Sende-/Empfangseinrichtung (13) aufweist,
und wobei
die im Mobilfunknetz (2) betreibbare Sende-/Empfangseinrichtung (13) der Vorrichtung (9) ein mit einer SIM-Karte eines Mobilfunknetzbetreibers nutzbares GSM- und/oder UMTS-Modul ist, und wobei das Kommunikationssystem derart ausgestaltet ist, dass bei Aufenthalt wenigstens eines mobilen Endgerätes (1) in dem Funkversorgungsbereich (10) für eine drahtlose Kommunikation (8) im Kurzstreckenbereich zumindest eine von dem wenigstens einen mobilen Endgerät (1) ausgehende Kommunikationsverbindung (8, 17) zu wenigstens einem Kommunikationspartner (22) über die im Mobilfunknetz (2) betreibbare Sende-/Empfangseinrichtung (13) der Vorrichtung (9) erfolgt,
und bei Aufenthalt des mobilen Endgerätes (1) in dem Funkversorgungsbereich (10) für eine drahtlose Kommunikation (8) im Kurzstreckenbereich für Kommunikationsverbindungen (14, 15, 16, 17) mit dem mobilen Endgerät (1) zwei Mobilfunkteilnehmerkennungen, sogenannte IMSI's, und/oder Gerätekennungen, sogenannte IMEI's, im Mobilfunknetz (2) nutzbar sind,
wobei das Kommunikationssystem ferner Mittel zum Zuordnen einer Rufnummer eines drahtgebundenen Fernsprechnetzes aufweist, welche dazu ausgebildet sind,
der SIM-Karte,
der Mobilfunkteilnehmerkennung, der sogenannten IMSI, und/oder
der Gerätekennung, der sogenannten IMEI,
der Vorrichtung (9) eine für Kommunikationsverbindungen (16, 17) nutzbare Rufnummer des drahtgebundenen Fernsprechnetzes zuzuordnen,
wobei über die im Mobilfunknetz (2) betreibbare Sende-/Empfangseinrichtung (13) der Vorrichtung (9) erfolgenden Kommunikationsverbindungen (16, 17) die Zuordnung einer Rufnummer des drahtgebundenen Fernsprechnetzes
mittels wenigstens einer Information seitens einer Mobilfunkteilnehmerdatenbank (19) des Mobilfunknetzes, insbesondere des sogenannten Home Location Registers, kurz HLR, unter Nutzung der Gerätekennung, der sogenannten IMEI, der Vorrichtung (9)
erfolgt.

2. Kommunikationssystem nach Anspruch 1, derart ausgestaltet, dass eine Kommunikation (8, 16, 17) zwischen dem Mobilfunknetz (2) und wenigstens einem mobilen Endgerät (1) bei Aufenthalt des wenigstens einen mobilen Endgerätes (1) in dem Funkversorgungsbereich (10) für eine drahtlose Kommunikation (8) im Kurzstreckenbereich über die im Mobilfunknetz (2) betreibbare Sende-/Empfangseinrichtung (13) der Vorrichtung (9) erfolgt.

3. Kommunikationssystem nach Anspruch 1 oder Anspruch 2, ferner umfassend Mittel zum Signalisieren, welche dazu ausgebildet sind, bei Aufenthalt mehrerer mobiler Endgeräte (1) in dem Funkversorgungsbereich (10) für eine drahtlose Kommunikation (8) im Kurzstreckenbereich seitens der Vorrichtung (9) über das Mobilfunknetz (2) eingehende Kommunikationsverbindungen (16) allen sich in dem Funkversorgungsbereich (10) für eine drahtlose Kommunikation (8) im Kurzstreckenbereich aufhaltenden mobilen Endgeräten (1) über eine drahtlose Kommunikation (8) im Kurzstreckenbereich zu signalisieren und eine Kommunikationsverbindung (8, 16) mit dem mobilen Endgerät (1) erfolgt, welches zuerst die eingehende Kommunikationsverbindung (16) annimmt, vorzugsweise durch Tasteneingabe seitens des mobilen Endgerätes (1).

4. Kommunikationssystem nach einem der Ansprüche 1 bis 3, wobei seitens des Mobilfunknetzes (2) wenigstens eine Funkzelle definiert ist und Mittel zum Betreiben der Sende-/Empfangseinrichtung (13) in einem vorgegebenen Modus vorgesehen sind, welche dazu ausgebildet sind, innerhalb der Funkzelle die im Mobilfunknetz (2) betreibbare Sende-/Empfangseinrichtung (13) der Vorrichtung (9) bei Aufenthalt derselben in der wenigstens einen definierten Funkzelle des Mobilfunknetzes (2) mit wenigstens einem vorzugsweise individuell vorgebbaren Modus zu betreiben.

5. Kommunikationssystem nach Anspruch 4, derart ausgestaltet, dass die Mittel zum Betreiben der Sende-/Empfangseinrichtung (13) in einem vorgegebenen Modus den Modus zur Vergebührung der Kommunikation (16, 17) nutzen.

6. Kommunikationssystem nach Anspruch 4 oder Anspruch 5, derart ausgestaltet, dass die Mittel zum Betreiben der Sende-/Empfangseinrichtung (13) in einem vorgegebenen Modus den Modus zum Betreiben der Sende-/Empfangseinrichtung (13) der Vorrichtung (9) im Mobilfunknetz (2) nutzen.

7. Kommunikationssystem nach einem der Ansprüche 1 bis 6, wobei der Funkversorgungsbereich (10) für eine drahtlose Kommunikation (8) im Kurzstreckenbereich einen definierten geographischen Aufenthaltsort aufweist.

8. Kommunikationssystem nach Anspruch 7, ferner umfassend Mittel zum Zuordnen eines geographischen Aufenthaltsortes, welche dazu ausgebildet sind, den geographischen Aufenthaltsort des Funkversorgungsbereichs (10) für eine drahtlose Kommunikation (8) im Kurzstreckenbereich im Mobilfunknetz (2) wenigstens einer den geographischen Aufenthaltsort entsprechend abdeckenden Funkzelle im Mobilfunknetz (2) zuzuordnen.

9. Kommunikationssystem nach einem der Ansprüche 1 bis 8, ferner umfassend Mittel zum Wiedergeben eines Aufenthaltsortes, welche dazu ausgebildet sind, den Aufenthalt des mobilen Endgerätes (1) in dem Funkversorgungsbereich (10) für eine drahtlose Kommunikation (8) im Kurzstreckenbereich seitens des mobilen Endgerätes (1) und/oder der Vorrichtung (9) wiederzugeben, vorzugsweise optisch und/oder akustisch.

10. Kommunikationssystem nach einem der Ansprüche 1 bis 9, ferner umfassend Mittel zum Wiedergeben einer Kommunikationsverbindung, welche dazu ausgebildet sind, eine über die im Mobilfunknetz (2) betreibbare Sende-/Empfangseinrichtung (13) der Vorrichtung (9) erfolgende Kommunikationsverbindung (16, 17) seitens des mobilen Endgerätes (1) und/oder seitens der Vorrichtung (9) wiederzugeben, vorzugsweise optisch und/oder akustisch.

11. Kommunikationssystem nach einem der Ansprüche 1 bis 10, derart ausgestaltet, dass die drahtlose Kommunikation (8) im Kurzstreckenbereich über Funk in dem Funkversorgungsbereich (10) für eine drahtlose Kommunikation (8) im Kurzstreckenbereich im ISM-Band erfolgt, vorzugsweise mittels Bluetooth, WLAN, WPAN und/oder DECT.

12. Kommunikationssystem nach einem der Ansprüche 1 bis 11, derart ausgestaltet, dass die Vorrichtung (9) zum Laden eines Akkumulators wenigstens eines mobilen Endgerätes (1) nutzbar ist, wozu die Vorrichtung (9) vorzugsweise ein das mobile Endgerät (1) schalenartig bzw. halbschalenartig aufnehmendes Gehäuse bzw. Gehäuseteil aufweist.

13. Kommunikationssystem nach einem der Ansprüche 1 bis 12, derart ausgestaltet, dass eine Authentifizierung der Nutzung der Vorrichtung (9) durch Eingabe wenigstens einer Authentifizierungsinformation, insbesondere einer PIN, seitens der Vorrichtung (9) und/oder wenigstens eines mobilen Endgerätes (1), vorzugsweise durch Tasteneingabe seitens der Vorrichtung (9) und/oder wenigstens eines mobilen Endgerätes (1) erfolgt.

14. Verfahren zum Aufbau einer Kommunikationsverbindung (14, 15, 16, 17) zum Austausch von Informationen zwischen wenigstens einem mobilen Endgerät (1) und einem Mobilfunknetz (2) in einem Kommunikationssystem nach einem der Ansprüche 1 bis 13,
wobei
bei Aufenthalt des wenigstens einen mobilen Endgerätes (1) in dem Funkversorgungsbereich (10) für eine drahtlose Kommunikation (8) im Kurzstreckenbereich zumindest für eine von dem wenigstens einen mobilen Endgerät (1) ausgehende Kommunikationsverbindung (8, 17) eine drahtlose Kommunikationsverbindung (8) im Kurzstreckenbereich über Funk zwischen dem wenigstens einen mobilen Endgerät (1) und der Vorrichtung (9) aufgebaut wird,
über die Kommunikationsverbindung (8) im Kurzstreckenbereich über Funk auszutauschende Informationen zwischen dem wenigstens einen mobilen Endgerät (1) und der Vorrichtung (9) ausgetauscht werden,
über die im Mobilfunknetz (2) betreibbare Sende-/Empfangseinrichtung (13) der Vorrichtung (9) eine Kommunikationsverbindung (17) zwischen der Vorrichtung (9) und dem Mobilfunknetz (2) aufgebaut wird und
die zwischen dem wenigstens einen mobilen Endgerät (1) und der Vorrichtung (9) ausgetauschten Informationen über die Kommunikationsverbindung (17) zwischen der Vorrichtung (9) und dem Mobilfunknetz (2) ausgetauscht werden.

15. Verfahren zum Aufbau einer Kommunikationsverbindung (14, 15, 16, 17) zum Austausch von Informationen zwischen wenigstens einem mobilen Endgerät (1) und einem Mobilfunknetz (2) in einem Kommunikationssystem nach einem der Ansprüche 1 bis 13,
wobei bei Aufenthalt des wenigstens einen mobilen Endgerätes (1) in dem Funkversorgungsbereich (10) für eine drahtlose Kommunikation (8) im Kurzstreckenbereich zumindest für eine an das wenigstens eine mobile Endgerät (1) gerichtete Kommunikationsverbindung (16, 8)
eine Kommunikationsverbindung (16) zwischen dem Mobilfunknetz (2) und der Vorrichtung (9) über die im Mobilfunknetz (2) betreibbare Sende-/Empfangseinrichtung (13) der Vorrichtung (9) aufgebaut wird,
über die Kommunikationsverbindung (16) zwischen dem Mobilfunknetz (2) und der Vorrichtung (9) auszutauschende Informationen ausgetauscht werden,
eine drahtlose Kommunikationsverbindung (8) im Kurzstreckenbereich über Funk zwischen der Vorrichtung (9) und dem wenigstens einen mobilen Endgerät (1) aufgebaut wird und
die zwischen dem Mobilfunknetz (2) und der Vorrichtung (9) ausgetauschten Informationen über die Kommunikationsverbindung (8) im Kurzstreckenbereich über Funk zwischen der Vorrichtung (9) und dem wenigstens einen mobilen Endgerät (1) ausgetauscht werden.

16. Verfahren nach Anspruch 14 oder Anspruch 15, wobei bei Aufenthalt mehrerer mobiler Endgeräte (1) in dem Funkversorgungsbereich (10) für eine drahtlose Kommunikation (8) im Kurzstreckenbereich seitens der Vorrichtung (9) über das Mobilfunknetz (2) eingehende Kommunikationsverbindungen (16) allen sich in dem Funkversorgungsbereich (10) für eine drahtlose Kommunikation (8) im Kurzstreckenbereich aufhaltenden mobilen Endgeräten (1) über eine drahtlose Kommunikation (8) im Kurzstreckenbereich signalisiert werden und eine Kommunikationsverbindung (8, 16) mit dem mobilen Endgerät (1) aufgebaut wird, welches zuerst die eingehende Kommunikationsverbindung (16) annimmt, vorzugsweise durch Tasteneingabe seitens des mobilen Endgerätes (1).

17. Verfahren nach einem der Ansprüche 14 bis 16, wobei der Aufenthalt des wenigstens einen mobilen Endgerätes (1) in dem Funkversorgungsbereich (10) für eine drahtlose Kommunikation (8) im Kurzstreckenbereich seitens des Mobilfunknetzes (2) erfasst wird, vorzugsweise mittels wenigstens einer Information seitens der Mobilfunkteilnehmerdatenbank (19) des Mobilfunknetzes, insbesondere eines Home Location Registers, kurz HLR.

18. Verfahren nach Anspruch 17, wobei die Information eine Erreichbarkeitsinformation für an das wenigstens eine mobile Endgerät (1) über das Mobilfunknetz (2) gerichtete Kommunikationsverbindungen (14, 16) umfasst.

19. Verfahren nach Anspruch 18, wobei an das wenigstens eine mobile Endgerät (1) über das Mobilfunknetz (2) gerichtete Kommunikationsverbindungen (16, 14) in Abhängigkeit von der Erreichbarkeitsinformation über die im Mobilfunknetz (2) betreibbare Sende-/Empfangseinrichtung (13) der Vorrichtung (9) und/oder mittels einer Kommunikationsverbindung (14) direkt über das wenigstens eine mobile Endgerät (1) aufgebaut werden.

20. Verfahren nach einem der Ansprüche 17 bis 19, wobei die Information seitens des wenigstens einen mobilen Endgerätes (1) und/oder der Vorrichtung (9) erzeugt wird, vorzugsweise durch wenigstens eine vorgebbare Eingabe seitens des wenigstens einen mobilen Endgerätes (1) und/oder der Vorrichtung (9).

21. Verfahren nach einem der Ansprüche 17 bis 20, wobei die Information über die im Mobilfunknetz (2) betreibbare Sende-/Empfangseinrichtung (13) der Vorrichtung (9) an das Mobilfunknetz (2) übertragen wird.

22. Verfahren nach einem der Ansprüche 17 bis 21, wobei die Information automatisch bei Aufenthalt des wenigstens einen mobilen Endgerätes (1) in dem Funkversorgungsbereich (10) für eine drahtlose Kommunikation im Kurzstreckenbereich erzeugt und/oder übertragen wird.

23. Verfahren nach einem der Ansprüche 14 bis 22, wobei seitens des Mobilfunknetzes (2) wenigstens eine Funkzelle definiert wird, innerhalb deren die im Mobilfunknetz (2) betreibbare Sende-/Empfangseinrichtung (13) der Vorrichtung (9) bei Aufenthalt derselben in der wenigstens einen definierten Funkzelle des Mobilfunknetzes (2) mit wenigstens einem vorzugsweise individuell vorgebbaren Modus betrieben wird.

24. Verfahren nach Anspruch 23, wobei der Modus zur Vergebührung der Kommunikation (16, 17) genutzt wird.

25. Verfahren nach Anspruch 23 oder Anspruch 24, wobei der Modus zum Betreiben der Sende-/Empfangseinrichtung (13) im Mobilfunknetz (2) genutzt wird.

26. Verfahren nach einem der Ansprüche 14 bis 25, wobei dem Funkversorgungsbereich (10) für eine drahtlose Kommunikation im Kurzstreckenbereich ein definierter geographischer Aufenthaltsort zugewiesen wird, der wenigstens einer den geographischen Aufenthaltsort entsprechend abdeckenden Funkzelle im Mobilfunknetz (2) entspricht.

27. Verfahren nach einem der Ansprüche 14 bis 26, wobei der Aufenthalt des wenigstens einen mobilen Endgerätes (1) in dem Funkversorgungsbereich (10) für eine drahtlose Kommunikation im Kurzstreckenbereich seitens des mobilen Endgerätes (1) und/oder der Vorrichtung (9) wiedergegeben wird, vorzugsweise optisch und/oder akustisch.

28. Verfahren nach einem der Ansprüche 14 bis 27, wobei eine über die im Mobilfunknetz (2) betreibbare Sende-/Empfangseinrichtung (13) der Vorrichtung (9) erfolgende Kommunikationsverbindung (16, 17) seitens des wenigstens einen mobilen Endgerätes (1) und/oder seitens der Vorrichtung (9) wiedergegeben wird.

29. Verfahren nach einem der Ansprüche 14 bis 28, wobei bei Aufenthalt des wenigstens einen mobilen Endgerätes (1) in dem Funkversorgungsbereich (10) für eine drahtlose Kommunikation im Kurzstreckenbereich für Kommunikationsverbindungen (14, 15, 16, 17) mit dem mobilen Endgerät (1) zwei Mobilfunkteilnehmerkennungen, sogenannte IMSI's, und/oder Gerätekennungen, sogenannte IMEI's im Mobilfunknetz (2) genutzt werden.

30. Verfahren nach einem der Ansprüche 14 bis 29, wobei eine Authentifizierung der Nutzung der Vorrichtung (9) durch Eingabe wenigstens einer Authentifizierungsinformation, insbesondere einer PIN, seitens der Vorrichtung (9) und/oder wenigstens eines mobilen Endgerätes (1), vorzugsweise durch Tasteneingabe seitens der Vorrichtung (9) und/oder wenigstens eines mobilen Endgerätes (1) erfolgt.

## Claims

1. A communication system for establishing a communication connection (14, 15, 16, 17) for exchanging information between at least one mobile terminal (1) and a mobile radio network (2), comprising
a mobile radio network (2) having a cellular network structure composed of radio cells,
a device (9) which can be connected with the mobile radio network (2) for communication purposes and which comprises at least one transmission and receiver device (11) that provides a radio network coverage area (10) for a wireless communication (8) in the short distance area, and
at least one mobile terminal (1) that can be operated in the mobile radio network (2) and that comprises a transmission and receiver device (7) which allows a wireless communication (8) in the short distance area via radio, wherein the device (9) for the communication connection (16, 17) with the mobile radio network (2) comprises a transmission and receiver device (13) that can be operated in the mobile radio network (2),
and wherein
the transmission and receiver device (13) of the device (9), which transmission and receiver device (13) can be operated in the mobile radio network (2), is a GSM and/or UMTS module usable with a SIM card of a mobile radio network operator,
and wherein the communication system is configured such that if at least one mobile terminal (1) is staying in the radio network coverage area (10) for a wireless communication (8) in the short distance area, at least one communication connection (8, 17) that goes out from the at least one mobile terminal (1) will be established to at least one communication partner via the transmission and receiver device (13) of the device (9), which transmission and receiver device (13) can be operated in the mobile radio network (2),
and if the mobile terminal (1) is staying in the radio network coverage area (10) for a wireless communication (8) in the short distance area, two mobile subscriber identifications, so called IMSI's and/or device identifications, so called IMEI's, can be used in the mobile radio network (2) for communication connections (14, 15, 16, 17) with the mobile terminal (1),
wherein the communication system furthermore comprises means for assigning a call number of a wired telephone network, which are configured for
assigning a call number of the wired telephone network usable for communication connections (16, 17)
to the SIM card,
to the mobile subscriber identification, the so called IMSI, and/or to the device identification, the so called IMEI, of the device (9),
wherein the allocation of a call number of the wired telephone network is realized via the communication connections (16, 17) established via the transmission and receiver device (13) of the device (9), which is operable in the mobile radio network (2), by means of at least one information item from a mobile subscriber database (19) of the mobile radio network, in particular the so called Home Location Register, briefly HLR, using the device identification, the so called IMEI, of the device (9).

2. A communication system according to claim 1, that is configured such that if at least one mobile terminal (1) is staying in the radio network coverage area (10) for a wireless communication (8) in the short distance area, a communication (8, 16, 17) between the mobile radio network (2) and the at least one mobile terminal (1) will be established via the transmission and receiver device (13) of the device (9), which transmission and receiver device (13) can be operated in the mobile radio network (2).

3. A communication system according to claim 1 or claim 2, furthermore comprising means for signalling which, if several mobile terminals (1) are staying in the radio network coverage area (10) for a wireless communication (8) in the short distance area, are configured for signalling communication connections (16) incoming from the device (9) via the mobile radio network to all mobile terminals (1) that are staying in the radio network coverage area (10) for a wireless communication (8) in the short distance area via a wireless communication (8) in the short distance area and wherein a communication connection (8, 16) is established with the mobile terminal (1) that is the first to accept the incoming communication connection (16), preferably by means of a key input on the mobile terminal (1).

4. A communication system according to one of the claims 1 to 3, wherein at least one radio cell is defined by the mobile radio network (2) and means for operating the transmission and receiver device (13) in a predetermined mode are provided which are configured for operating the transmission and receiver device (13) of the device (9) that is operable in the mobile radio network (2) within the radio cell with at least one mode that can preferably be pre-determined individually, if the transmission and receiver device (13) is staying in the at least one defined radio cell of the mobile radio network (2).

5. A communication system according to claim 4 that is configured such that the means for operating the transmission and receiver device (13) in a predefined mode use the mode of billing the communication (16, 17).

6. A communication system according to claim 4 or claim 5 that is configured such that the means for operating the transmission and receiver device (13) in a predefined mode use the mode of operating the transmission and receiver device (13) of the device (9) in the mobile radio network (2).

7. A communication system according to one of the claims 1 to 6, wherein the radio network coverage area (10) for a wireless communication (8) in the short distance area comprises a defined geographical local position.

8. A communication system according to claim 7, furthermore comprising means for assigning a geographical local position, which are configured for assigning the geographical local position of the radio network coverage area (10) for a wireless communication (8) in the short distance area in the mobile radio network (2) to at least one radio cell in the mobile radio network (2) which correspondingly covers the geographical local position.

9. A communication system according to one of the claims 1 to 8, furthermore comprising means for reproducing a local position, which are configured for reproducing the local position of the mobile terminal (1) in the radio network coverage area (10) for a wireless communication (8) in the short distance area by means of the mobile terminal (1) and/or the device (9), preferably in an optical and/or acoustic manner.

10. A communication system according to one of the claims 1 to 9, furthermore comprising means for reproducing a communication connection, which are configured for reproducing a communication connection (16, 17) established via the transmission and receiver device (13) of the device (9) that can be operated in the mobile radio network (2) by means of the mobile terminal (1) and/or by means of the device (9), preferably in an optical and/or acoustic manner.

11. A communication system according to one of the claims 1 to 10 that is configured such that the wireless communication (8) in the short distance area is realized via radio in the radio network coverage area (10) for a wireless communication (8) in the short distance area within the ISM band, preferably by means of Bluetooth, WLAN, WPAN and/or DECT.

12. A communication system according to one of the claims 1 to 11 that is configured such that the device (9) can be used for charging an accumulator of at least one mobile terminal (1), for which purpose the device (9) preferably comprises a housing or a housing component which receives the mobile terminal (1) in the form of a shell or a half shell.

13. A communication system according to one of the claims 1 to 12 that is configured such that an authentication of the use of the device (9) is realized by entering at least one authentication information item, in particular a PIN, by means of the device (9) and/or a mobile terminal (1), preferably by means of a key input on the device (9) and/or at least one mobile terminal (1).

14. A method for establishing a communication connection (14, 15, 16, 17) for exchanging information between at least one mobile terminal (1) and a mobile radio network (2) in a communication system according to one of the claims 1 to 13,
wherein
if at least one mobile terminal (1) is staying in the radio network coverage area (10) for a wireless communication (8) in the short distance area, a wireless communication connection (8) in the short distance area will be established via radio between the at least one mobile terminal (1) and the device (9) for a communication connection (8, 17) that goes out from the at least one mobile terminal (1),
information to be exchanged via the communication connection (8) in the short distance area via radio will be exchanged between the at least one mobile terminal (1) and the device (9),
a communication connection (17) between the device (9) and the mobile radio network (2) will be established via the transmission and receiver device (13) of the device (9) which is operable in the mobile radio network (2) and the information exchanged between the at least one mobile terminal (1) and the device (9) will be exchanged via the communication connection (17) between the device (9) and the mobile radio network (2).

15. A method for establishing a communication connection (14, 15, 16, 17) for exchanging information between at least one mobile terminal (1) and a mobile radio network (2) in a communication system according to one of the claims 1 to 13,
wherein if the at least one mobile terminal (1) is staying in the radio network coverage area (10) for a wireless communication (8) in the short distance area, a communication connection (16) between the mobile radio network (2) and the device (9) will be established via the transmission and receiver device (13) of the device (9) which is operable in the mobile radio network (2) at least for a communication connection (16, 8) directed to the at least one mobile terminal (1),
information to be exchanged via the communication connection (16) between the mobile radio network (2) and the device (9) will be exchanged,
a wireless communication connection (8) in the short distance area will be established via radio between the device (9) and the at least one mobile terminal (1) and
the information that has been exchanged between the mobile radio network (2) and the device (9) will be exchanged via the communication connection (8) in the short distance area via radio between the device (9) and the at least one mobile terminal (1).

16. A method according to claim 14 or claim 15, wherein if several mobile terminals (1) are staying in the radio network coverage area (10) for a wireless communication (8) in the short distance area, communication connections (16) incoming from the device (9) via the mobile radio network will be signalled to all mobile terminals (1) that are staying in the radio network coverage area (10) for a wireless communication (8) in the short distance area via a wireless communication (8) in the short distance area and a communication connection (8, 16) will be established with the mobile terminal (1) that is the first to accept the incoming communication connection (16), preferably by means of a key input on the mobile terminal (1).

17. A method according to one of the claims 14 to 16, wherein the presence of the at least one mobile terminal (1) in the radio network coverage area (10) for a wireless communication (8) in the short distance area will be detected by the mobile radio network (2), preferably by means of at least one information item from the mobile subscriber database (19) of the mobile radio network, in particular a Home Location Register, briefly HLR.

18. A method according to claim 17, wherein the information item comprises a reachability information item for communication connections (14, 16) directed via the mobile radio network (2) to the at least one mobile terminal (1).

19. A method according to claim 18, wherein communication connections (16, 14) directed via the mobile radio network (2) to the at least one mobile terminal (1) will be established in dependence on the reachability information item via the transmission and receiver device (13) of the device (9), which transmission and receiver device (13) is operable in the mobile radio network (2), and/or by means of a communication connection (14) directly via the at least one mobile terminal (1).

20. A method according to one of the claims 17 to 19, wherein the information item will be produced by means of the at least one mobile terminal (1) and/or the device (9), preferably by means of at least one pre-determinable input by the at least one mobile terminal (1) and/or the device (9).

21. A method according to one of the claims 17 to 20, wherein the information item will be transmitted via the transmission and receiver device (13) of the device (9), which transmission and receiver device (13) is operable in the mobile radio network (2), to the mobile radio network (2).

22. A method according to one of the claims 17 to 21, wherein the information item will be automatically generated and/or transmitted, if the at least one mobile terminal (1) is staying in the radio network coverage area (10) for a wireless communication in the short distance area.

23. A method according to one of the claims 14 to 22, wherein at least one radio cell is defined by the mobile radio network (2), within which radio cell the transmission and receiver device (13) of the device (9) that is operable in the mobile radio network (2) will be operated with at least one mode that can preferably be pre-determined individually, if the transmission and receiver device (13) is staying in the at least one defined radio cell of the mobile radio network (2).

24. A method according to claim 23, wherein the mode of billing the communication (16, 17) will be used.

25. A method according to claim 23 or claim 24, wherein the mode of operating the transmission and receiver device (13) in the mobile radio network (2) will be used.

26. A method according to one of the claims 14 to 25, wherein a defined geographical local position will be assigned to the radio network coverage area (10) for a wireless communication in the short distance area, which local position corresponds to at least one radio cell in the mobile radio network (2) which correspondingly covers the geographical local position.

27. A method according to one of the claims 14 to 26, wherein the stay of the mobile terminal (1) in the radio network coverage area (10) for a wireless communication in the short distance area will be reproduced by means of the mobile terminal (1) and/or the device (9), preferably in an optical and/or acoustic manner.

28. A method according to one of the claims 14 to 27, wherein a communication connection (16, 17) established via the transmission and receiver device (13) of the device (9), which transmission and receiver device (13) can be operated in the mobile radio network (2), will be reproduced by means of the at least one mobile terminal (1) and/or by means of the device (9).

29. A method according to one of the claims 14 to 28, wherein if the at least one mobile terminal (1) is staying in the radio network coverage area (10) for a wireless communication in the short distance area, two mobile subscriber identifications, so called IMSI's and/or device identifications, so called IMEI's, will be used in the mobile radio network (2) for communication connections (14, 15, 16, 17) with the mobile terminal (1).

30. A method according to one of the claims 14 to 29, wherein an authentication of the use of the device (9) is realized by entering at least one authentication information item, in particular a PIN, by means of the device (9) and/or at least one mobile terminal (1), preferably by means of a key input on the device (9) and/or at least one mobile terminal (1).

## Revendications

1. Système de communication pour établir une liaison de communication (14, 15, 16, 17) pour échanger des informations entre au moins un terminal mobile (1) et un réseau radio mobile (2), comprenant
un réseau radio mobile (2) ayant une structure de réseau cellulaire composée de cellules radio,
un dispositif (9), qui peut être relié au réseau radio mobile (2) à des fins de communication, et qui comprend au moins un dispositif émetteur et récepteur (11), qui fournit une zone de desserte radio (10) pour une communication sans fil (8) dans la zone de courtes distances, et
au moins un terminal mobile (1) fonctionnant dans le réseau radio mobile (2), lequel terminal mobile comprend un dispositif émetteur et récepteur (7), qui permet une communication sans fil (8) dans la zone de courtes distances par radio,
dans lequel le dispositif (9) pour la liaison de communication (16, 17) avec le réseau radio mobile (2) comprend un dispositif émetteur et récepteur (13) fonctionnant dans le réseau radio mobile (2),
et dans lequel
le dispositif émetteur et récepteur (13) fonctionnant dans le réseau radio mobile (2) du dispositif (9) est un module GSM et/ou UMTS utilisable avec une carte SIM d'un opérateur de réseau radio mobile,
et dans lequel le système de communication est configuré de sorte que si au moins un terminal mobile (1) se trouve dans la zone de desserte radio (10) pour une communication sans fil (8) dans la zone de courtes distances, au moins une liaison de communication (8, 17) sortant de l'au moins un terminal mobile (1) sera établie avec au moins un partenaire de communication (22) via le dispositif émetteur et récepteur (13) fonctionnant dans le réseau radio mobile (2) du dispositif (9),
et si le terminal mobile (1) se trouve dans la zone de desserte radio (10) pour une communication sans fil (8) dans la zone de courtes distances, deux identifications d'abonné mobile, dites IMSI's, et/ou deux indentifications de dispositif, dites IMEI's, peuvent être utilisées dans le réseau radio mobile (2) pour des liaisons de communication (14, 15, 16, 17) avec le terminal mobile (1),
dans lequel le système de communication comprend en outre des moyens destinés à attribuer un numéro d'appel d'un réseau de téléphonie avec fil, lesquels moyens sont configurés pour attribuer un numéro d'appel du réseau de téléphonie avec fil, qui est utilisable pour des liaisons de communication (16, 17)
à la carte SIM,
à l'identification d'abonné mobile, à la dite IMSI, et/ou à l'identification de dispositif, à la dite IMEI, du dispositif (9),
dans lequel l'attribution d'un numéro d'appel du réseau de téléphonie avec fil est réalisée via les liaisons de communication (16, 17) établies via le dispositif émetteur et récepteur (13) fonctionnant dans le réseau radio mobile (2) du dispositif (9) par moyen d'au moins une information d'une base de données d'abonnés mobiles (19) du réseau radio mobile, notamment du dit Home Location Register, brièvement HLR, en utilisant l'identification de dispositif, la dite IMEI, du dispositif (9).

2. Système de communication selon la revendication 1, qui est configuré de sorte que si l'au moins un terminal mobile (1) se trouve dans la zone de desserte radio (10) pour une communication sans fil (8) dans la zone de courtes distances, une communication (8, 16, 17) entre le réseau radio mobile (2) et l'au moins un terminal mobile (1) sera établie via le dispositif émetteur et récepteur (13) fonctionnant dans le réseau radio mobile (2) du dispositif (9).

3. Système de communication selon la revendication 1 ou la revendication 2, comprenant en outre des moyens de signalisation, qui sont configurés, dans le cas où plusieurs terminaux mobiles (1) se trouvent dans la zone de desserte radio (10) pour une communication sans fil (8) dans la zone de courtes distances, pour signaler des liaisons de communication (16), qui arrivent à partir du dispositif (9) via le réseau radio mobile (2), à tous les terminaux mobiles (1), qui se trouvent dans la zone de desserte radio (10) pour une communication sans fil (8) dans la zone de courtes distances via une communication sans fil (8) dans la zone de courtes distances et dans lequel une liaison de communication (8, 16) est établie avec le terminal mobile (1), qui est le premier qui répond à la liaison de communication (16) arrivant, de préférence par moyen d'appui sur une touche du terminal mobile (1).

4. Système de communication selon l'une des revendications 1 à 3, dans lequel au moins une cellule radio est définie par le réseau radio mobile (2) et dans lequel des moyens pour faire fonctionner le dispositif émetteur et récepteur (13) dans un mode prédéterminé sont prévus, qui sont configurés pour faire fonctionner le dispositif émetteur et récepteur (13) fonctionnant dans le réseau radio mobile (2) du dispositif (9) à l'intérieur de la cellule radio dans au moins un mode, qui est de préférence pré-déterminable de manière individuelle, si le dispositif émetteur et récepteur (13) se trouve dans l'au moins une cellule radio définie du réseau radio mobile (2).

5. Système de communication selon la revendication 4, qui est configuré de sorte que les moyens pour faire fonctionner le dispositif émetteur et récepteur (13) dans un mode prédéterminé utilisent le mode de facturation de la communication (16, 17).

6. Système de communication selon la revendication 4 ou la revendication 5, qui est configuré de sorte que les moyens pour faire fonctionner le dispositif émetteur et récepteur (13) dans un mode prédéterminé utilisent le mode de faire fonctionner le dispositif émetteur et récepteur (13) du dispositif (9) dans le réseau radio mobile (2).

7. Système de communication selon l'une des revendications 1 à 6, dans lequel la zone de desserte radio (10) pour une communication sans fil (8) dans la zone de courtes distances comprend un emplacement géographique défini.

8. Système de communication selon la revendication 7, comprenant en outre des moyens pour attribuer un emplacement géographique, lesquels moyens sont configurés pour attribuer l'emplacement géographique de la zone de desserte radio (10) pour une communication sans fil (8) dans la zone de courtes distances dans le réseau radio mobile (2) à au moins une cellule radio dans le réseau radio mobile (2), laquelle couvre de manière correspondante l'emplacement géographique.

9. Système de communication selon l'une des revendications 1 à 6, comprenant en outre des moyens de reproduction d'un emplacement, lesquels moyens sont configurés pour reproduire l'emplacement du terminal mobile (1) dans la zone de desserte radio (10) pour une communication sans fil (8) dans la zone de courtes distances par moyen du terminal mobile (1) et/ou du dispositif (9), de préférence de manière optique et/ou acoustique.

10. Système de communication selon l'une des revendications 1 à 9, comprenant en outre des moyens de reproduction d'une liaison de communication, lesquels moyens sont configurés pour reproduire une liaison de communication (16, 17) établie via le dispositif émetteur et récepteur (13) fonctionnant dans le réseau radio mobile (2) du dispositif (9) par moyen du terminal mobile (1) et/ou par moyen du dispositif (9), de préférence de manière optique et/ou acoustique.

11. Système de communication selon l'une des revendications 1 à 10, qui est configuré de sorte que la communication sans fil (8) dans la zone de courtes distances est réalisée via radio dans la zone de desserte radio (10) pour une communication sans fil (8) dans la zone de courtes distances dans la bande ISM, de préférence par moyen de Bluetooth, de WLAN, de WPAN et/ou par moyen de DECT.

12. Système de communication selon l'une des revendications 1 à 11, qui est configuré de sorte que le dispositif (9) est utilisable pour charger un accumulateur d'au moins un terminal mobile (1), à quelle fin le dispositif (9) comprend de préférence un boîtier ou un élément de boîtier, qui reçoit le terminal mobile (1) sous forme d'une coque ou d'une demi-coque.

13. Système de communication selon l'une des revendications 1 à 12, qui est configuré de sorte qu'une authentification de l'utilisation du dispositif (9) est réalisée par l'entrée d'au moins une information d'authentification, notamment d'un numéro d'identification personnel, par moyen du dispositif (9) et/ou par moyen d'au moins un terminal mobile (1), de préférence par moyen d'appui sur une touche du dispositif (9) et/ou de l'au moins un terminal mobile (1).

14. Procédé d'établissement d'une liaison de communication (14, 15, 16, 17) pour échanger des informations entre au moins un terminal mobile (1) et un réseau radio mobile (2) dans un système de communication selon l'une des revendications 1 à 13,
dans lequel
si l'au moins un terminal mobile (1) se trouve dans la zone de desserte radio (10) pour une communication sans fil (8) dans la zone de courtes distances, au moins une liaison de communication (8) sans fil dans la zone de courtes distances sera établie via radio entre l'au moins un terminal mobile (1) et le dispositif (9) pour une liaison de communication (8, 17) sortant de l'au moins un terminal mobile (1),
des informations à échanger par la liaison de communication (8) dans la zone de courtes distances via radio sont échangées entre l'au moins un terminal mobile (1) et le dispositif (9),
une liaison de communication (17) entre le dispositif (9) et le réseau radio mobile (2) est établie via le dispositif émetteur et récepteur (13) fonctionnant dans le réseau radio mobile (2) du dispositif (9) et
les informations échangées entre l'au moins un terminal mobile (1) et le dispositif (9) seront échangée via la liaison de communication (17) entre le dispositif (9) et le réseau radio mobile (2).

15. Procédé d'établissement d'une liaison de communication (14, 15, 16, 17) pour échanger des informations entre au moins un terminal mobile (1) et un réseau radio mobile (2) dans un système de communication selon l'une des revendications 1 à 13,
dans lequel si l'au moins un terminal mobile (1) se trouve dans la zone de desserte radio (10) pour une communication sans fil (8) dans la zone de courtes distances, une liaison de communication (16) entre le réseau radio mobile (2) et le dispositif (9) sera établie via le dispositif émetteur et récepteur (13) fonctionnant dans le réseau radio mobile (2) du dispositif (9) au moins pour une liaison de communication (16, 8) dirigée à l'au moins un terminal mobile (1),
des informations à échanger via la liaison de communication (16) entre le réseau radio mobile (2) et le dispositif (9) seront échangées,
un liaison de communication (8) sans fil dans la zone de courtes distances sera établie via radio entre le dispositif (9) et l'au moins un terminal mobile (1) et
les informations échangées entre le réseau radio mobile (2) et le dispositif (9) seront échangées via la liaison de communication (8) dans la zone de courtes distances par radio entre le dispositif (9) et l'au moins un terminal mobile (1).

16. Procédé selon la revendication 14 ou la revendication 15, dans lequel dans le cas où plusieurs terminaux mobiles (1) se trouvent dans la zone de desserte radio (10) pour une communication sans fil (8) dans la zone de courtes distances, des liaisons de communication (16), qui arrivent à partir du dispositif (9) via le réseau radio mobile (2), sont signalées à tous les terminaux mobiles (1), qui se trouvent dans la zone de desserte radio (10) pour une communication sans fil (8) dans la zone de courtes distances via une communication sans fil (8) dans la zone de courtes distances et dans lequel une liaison de communication (8, 16) est établie avec le terminal mobile (1), qui est le premier qui répond à la liaison de communication (16) arrivant, de préférence par moyen d'appui sur une touche du terminal mobile (1).

17. Procédé selon l'une des revendications 14 à 16, dans lequel le séjour de l'au moins un terminal mobile (1) dans la zone de desserte radio (10) pour une communication sans fil (8) dans la zone de courtes distances est détecté par le réseau radio mobile (2), de préférence par moyen d'au moins une information de la base de données d'abonnés mobiles (19) du réseau radio mobile, notamment d'un Home Location Register, brièvement HLR.

18. Procédé selon la revendication 17, dans lequel l'information comprend une information d'accessibilité pour des liaisons de communication (14, 16) dirigées via le réseau radio mobile (2) à l'au moins un terminal mobile (1).

19. Procédé selon la revendication 18, dans lequel des liaisons de communication (16, 14) dirigées via le réseau radio mobile (2) à l'au moins un terminal mobile (1) sont établies en fonction de l'information d'accessibilité via le dispositif émetteur et récepteur (13) fonctionnant dans le réseau radio mobile (2) du dispositif (9) et/ou par moyen d'une liaison de communication (14) directement via l'au moins un terminal mobile (1).

20. Procédé selon l'une des revendications 17 à 19, dans lequel l'information est générée par moyen de l'au moins un terminal mobile (1) et/ou par moyen du dispositif (9), de préférence par moyen d'au moins une entrée pré-déterminable par l'au moins un terminal mobile (1) et/ou par le dispositif (9).

21. Procédé selon l'une des revendications 17 à 20, dans lequel l'information est transmise via le dispositif émetteur et récepteur (13) fonctionnant dans le réseau radio mobile (2) du dispositif (9) au réseau radio mobile (2).

22. Procédé selon l'une des revendications 17 à 21, dans lequel si l'au moins un terminal mobile (1) se trouve dans la zone de desserte radio (10) pour une communication sans fil dans la zone de courtes distances, l'information sera générée et/ou transmise automatiquement.

23. Procédé selon l'une des revendications 14 à 22, dans lequel au moins une cellule radio est définie par le réseau radio mobile (2), dans laquelle cellule radio le dispositif émetteur et récepteur (13) fonctionnant dans le réseau radio mobile (2) du dispositif (9) sera fait fonctionner dans un mode, qui peut de préférence être prédéterminé de manière individuelle, si le dispositif émetteur et récepteur (13) se trouve dans l'au moins une cellule radio définie du réseau radio mobile (2).

24. Procédé selon la revendication 23, dans lequel le mode de facturation de la communication (16, 17) sera utilisé.

25. Procédé selon la revendication 23 ou la revendication 24, dans lequel le mode de faire fonctionner le dispositif émetteur et récepteur (13) dans le réseau radio mobile (2) sera utilisé.

26. Procédé selon l'une des revendications 14 à 25, dans lequel un emplacement géographique défini est attribué à la zone de desserte radio (10) pour une communication sans fil (8) dans la zone de courtes distances. lequel emplacement géographique correspond à au moins une cellule radio dans le réseau radio mobile (2), laquelle couvre de manière correspondante l'emplacement géographique.

27. Procédé selon l'une des revendications 14 à 26, dans lequel l'emplacement de l'au moins un terminal mobile (1) dans la zone de desserte radio (10) pour une communication sans fil dans la zone de courtes distances est reproduit par moyen du terminal mobile (1) et/ou du dispositif (9), de préférence de manière optique et/ou acoustique.

28. Procédé selon l'une des revendications 14 à 27, dans lequel une liaison de communication (16, 17) établie via le dispositif émetteur et récepteur (13) fonctionnant dans le réseau radio mobile (2) du dispositif (9) est reproduite par moyen de l'au moins un terminal mobile (1) et/ou par moyen du dispositif (9).

29. Procédé selon l'une des revendications 14 à 28, dans lequel si l'au moins un terminal mobile (1) se trouve dans la zone de desserte radio (10) pour une communication sans fil dans la zone de courtes distances, deux identifications d'abonné mobile, dites IMSI's, et/ou deux indentifications de dispositif, dites IMEI's, sont utilisées dans le réseau radio mobile (2) pour des liaisons de communication (14, 15, 16, 17) avec le terminal mobile (1).

30. Procédé selon l'une des revendications 14 à 29, dans lequel une authentification de l'utilisation du dispositif (9) est réalisée par l'entrée d'au moins une information d'authentification, notamment d'un numéro d'identification personnel, par moyen du dispositif (9) et/ou par moyen d'au moins un terminal mobile (1), de préférence par moyen d'appui sur une touche du dispositif (9) et/ou de l'au moins un terminal mobile (1).
